# EUROPÄISCHE PATENTSCHRIFT

(11) **EP 3 287 221 B1**
(45) Veröffentlichungstag und Bekanntmachung des Hinweises auf die Patenterteilung: **24.04.2019**
(21) Anmeldenummer: 16185237.1
(22) Anmeldetag: 23.08.2016
(51) Int. Cl.: B23F 15/06

(54) **VERFAHREN ZUR BEARBEITUNG DER ZAHNFLANKEN VON PLANKUPPLUNGS-WERKSTÜCKEN IM SEMI-COMPLETING EINZELTEILVERFAHREN**
METHOD FOR PROCESSING THE TOOTH FLANKS OF PLANE COUPLING WORKPIECES IN SEMI-COMPLETING SINGLE PART METHOD
PROCÉDÉ DE TRAITEMENT DE FLANCS DE DENTS DE PIÈCES D'USINAGE D'ACCOUPLEMENT PLAN SELON UN PROCÉDÉ DE PIÈCES INDIVIDUELLES SEMI-COMPLÈTES

(43) Veröffentlichungstag der Anmeldung: 28.02.2018
(73) Patentinhaber: Klingelnberg AG, 8050 Zürich (CH)
(72) Erfinder: Ribbeck, Karl-Martin, 42897 Remscheid (DE)
(74) Vertreter: Heusch, Christian

(56) Entgegenhaltungen:
- EP-A1- 2 535 134
- EP-A1- 2 923 790
- EP-B1- 2 152 459
- DE-C- 650 798
- DE-C1- 19 517 360
- GB-A- 1 106 150
- US-A- 2 787 939
- US-A1- 2012 027 531

## Beschreibung

### Gebiet der Erfindung

Gegenstand der Erfindung ist ein Verfahren zum Bearbeiten der Verzahnung von Plankupplungen, wobei es sich konkret um ein Semi-Completing Einzelteilverfahren handelt. Ein derartiges Verfahren gemäß dem Oberbegriff des Anspruchs 1 ist aus dem Dokument US 2 787 939 A bekannt.

Plankupplungen haben einen Kegelwinkel, der 90 Grad beträgt. Die Plankupplungen werden auch als Stirnzahnkupplungen bezeichnet. Plankupplungen kommen z.B. in Triebwerken, an den Achsen von Fahrzeugen und z.B. auch an deren Nockenwellen zum Einsatz. Sie werden auch in Windkraftanlagen eingesetzt. Plankupplungen können als permanente Kupplungen eingesetzt werden, die sich durch eine starre, kraftschlüssige Verbindung zweier Kupplungselemente (auch Kupplungshälften genannt) auszeichnen. Die beiden Kupplungshälften können in diesem Fall miteinander verschraubt oder anderweitig verbunden sein. Plankupplungen können aber auch als trennbare Kupplungen (Schaltkupplungen genannt) eingesetzt werden.

Die Zähne der Plankupplungen sollten eine hohe Genauigkeit aufweisen und eine maximale Lastübertragung, d.h. eine hohe Tragfähigkeit, ermöglichen. Die Zähne von Plankupplungen haben einen bogenförmigen (spiralförmigen) Zahnverlauf, d.h. die Flankenlängslinien sind bogenförmig. Beim Paaren zweier Kupplungselemente kommen gleichzeitig alle konkaven Zahnflanken eines ersten Kupplungselements mit allen konvexen Zahnflanken des zweiten Kupplungselements zum Eingriff. D.h. es werden je eine linksspiralige mit je einer rechtsspiraligen Kupplungshälfte gepaart.

Plankupplungen können auf verschiedenen Wegen hergestellt werden, wie im Folgenden beschrieben wird. Man unterscheidet Plankupplungen, die nach dem Klingelnberg Zyklo-Palloid-Verfahren und nach dem Oerlikon-Verfahren hergestellt wurden. Außerdem gibt es Plankupplungen, die als Curvic® Couplings (Firma Gleason, USA) bezeichnet werden.

Das Zyklo-Palloid-Verfahren ist ein kontinuierliches Verfahren und die Zähne von Plankupplungen, die nach dem Zyklo-Palloid-Verfahren hergestellt wurden, haben eine veränderliche Zahnhöhe. Beim Zyklo-Palloid-Verfahren kommen zwei Messerköpfe zum Einsatz, die exzentrisch ineinander gelagert sind. Nicht alle Maschinen sind geeignet zwei Messerköpfe in der genannten Art und Weise aufzunehmen. Die Messer, die beim Zyklo-Palloid-Verfahren eingesetzt werden, sind in Gruppen zusammengefasst und sie sind auf einem kurzen Abschnitt einer mehrgängigen Spirale am Messerkopf angeordnet. Während sich beim Zyklo-Palloid-Verfahren die Messerköpfe und das Werkstück kontinuierlich drehen, durchläuft jede neue Messergruppe die nachfolgende Zahnlücke des zu bearbeitenden Werkstücks. Den konvexen und den konkaven Zahnflanken der Plankupplungen sind beim Zyklo-Palloid-Verfahren getrennte Messer zugeordnet. Diese getrennten Messer sind jedoch auf demselben Flugkreisradius angeordnet, wenn man von einem kleinen Korrekturwert absieht, der notwendig ist, um eine Längsballigkeit zu erzeugen. Es ist ein Nachteil von Plankupplungen, die nach dem Zyklo-Palloid-Verfahren hergestellt wurden, dass diese nicht hartfein bearbeitet werden können.

Die Messerköpfe, die im Rahmen des Oerlikon-Verfahrens als Werkzeuge zum Einsatz kommen, haben einen komplexen Aufbau. Es ist ein Nachteil von Plankupplungen, die nach dem Oerlikon-Verfahren hergestellt wurden, dass auch diese nicht hartfein bearbeitet werden können.

Beim Curvic® Coupling-Verfahren hängen der Radius des Werkzeugs, die Zähnezahl der Plankupplung und der Durchmesser der Plankupplung voneinander ab. Bei dem Curvic® Coupling-Verfahren werden stets zwei Zahnlücken gleichzeitig geschnitten. Anschließend werden die Zähne der Plankupplungen geschliffen. Es ist wesentlicher Nachteil der Curvic® Couplings, dass diese zwingend eine ganzzahlige Zähnezahl aufweisen müssen. Außerdem haben die Zähne der Curvic® Couplings eine konstante Zahnhöhe.

Bei der industriellen Herstellung von Plankupplungen geht es unter anderem auch um das Ziel einfache und schnelle Verfahren zu finden, da diese Faktoren einen Einfluss auf die Wirtschaftlichkeit haben.

Es stellt sich also die Aufgabe, ein Verfahren zur industriellen Herstellung von Plankupplungen bereit zu stellen, das mehr Freiheitsgrade bietet und das flexibler einsetzbar ist. Außerdem soll das Verfahren wirtschaftlicher sein als die bisher bekannten Verfahren.

Gemäß Erfindung wird ein Verfahren gemäss Anspruch 1 bereit gestellt, das sich dadurch auszeichnet, dass es sich um ein Semi-Completing Einzelteilverfahren handelt. Bei diesem Semi-Completing Einzelteilverfahren kommt ein Werkzeug zum Einsatz kommt, bei dem es sich entweder um ein Verzahnwerkzeug handelt, das mindestens einen Schneidkopf mit zwei Schneiden umfasst, die so an dem mindestens einen Schneidkopf angeordnet sind, dass sie eine positive Spitzenweite definieren. Es kann bei dem Semi-Completing Einzelteilverfahren aber auch ein Schleifwerkzeug in Form einer Topfschleifscheibe als Werkzeug zum Einsatz kommen, das zwei Schleifflächen aufweist, die eine positive Profilweite definieren. Das Semi-Completing Einzelteilverfahren der Erfindung umfasst die folgenden Schritte:
A1. Ausführen mindestens einer ersten relativen Einstellbewegung, um eine erste Relativeinstellung des Werkzeugs relativ zum Plankupplungswerkstück zu erreichen, wobei als Teil der ersten relativen Einstellbewegung das Ausführen einer Austauchbewegung und einer Eintauchbewegung vorgenommen wird,
A2. Fertigbearbeiten einer ersten Zahnflanke einer Zahnlücke des Plankupplungswerkstücks mit einer ersten Schneide der beiden Schneiden oder mit der ersten Schleiffläche der beiden Schleifflächen des Werkzeugs und gleichzeitiges Vorbearbeiten einer zweiten Zahnflanke derselben Zahnlücke mit der zweiten Schneide der beiden Schneiden oder mit der zweiten Schleiffläche der beiden Schleifflächen in der ersten Relativeinstellung,
A3. Ausführen mindestens einer zweiten relativen Einstellbewegung, um eine zweite Relativeinstellung des Werkzeugs relativ zum Plankupplungswerkstück zu erreichen, wobei als Teil der zweiten relativen Einstellbewegung das Ausführen einer Austauchbewegung und einer Eintauchbewegung vorgenommen wird,
A4. Fertigbearbeiten der zweiten Zahnflanke derselben oder einer weiteren Zahnlücke mit einer zweiten Schneide der beiden Schneiden oder mit der zweiten Schleiffläche der beiden Schleifflächen des Werkzeugs in der zweiten Relativeinstellung.

Vorzugsweise gelten bei allen Ausführungsformen für die erste Relativeinstellung die folgenden Aussagen:
∘ es werden alle ersten Schneiden oder die erste Schleiffläche entlang einer ersten Flugbahn und alle zweiten Schneiden oder die zweite Schleiffläche entlang einer zweiten Flugbahn bewegt, und
∘ die erste Flugbahn spannt zusammen mit der zweiten Flugbahn eine gemeinsame Ebene auf.

Vorzugsweise gelten bei allen Ausführungsformen für die zweite Relativeinstellung die folgenden Aussagen:
∘ es werden alle zweiten Schneiden oder die zweite Schleiffläche entlang einer dritten Flugbahn bewegt,
∘ die dritte Flugbahn hat einen Radius, der grösser ist als der Radius der zweiten Flugbahn, und
∘ die dritte Flugbahn eine Ebene aufspannt, die schräg liegt zu der gemeinsamen Ebene.

Es ist zu beachten, dass die genannten Schritte A1. bis A4. nicht direkt hintereinander ausgeführt werden müssen. Die Schritte A3. und A4. werden in einer bevorzugten Ausführungsform (lückenübergreifendes Semi-Completing Einzelteilverfahren) z.B. erst dann ausgeführt, wenn alle ersten Zahnflanken aller Zahnlücken des Plankupplungswerkstück im Rahmen der sich wiederholenden Schritte A1. und A2. fertig bearbeitet und alle zweiten Zahnflanken aller Zahnlücken vorbearbeitet wurden.

Vorteilhafte Ausgestaltungen der Erfindung sind den abhängigen Ansprüchen zu entnehmen.

Da je nach Verfahrensablauf der Erfindung zu verschiedenen Zeiten Relativbewegungen zwischen Werkzeug und Plankupplungswerkstück ausgeführt werden, z.B. beim Verändern der Maschineneinstellung, und/oder da teilweise zum selben Zeitpunkt, unmittelbar zeitlich nacheinander oder zu unterschiedlichen Zeiten eine Teilungsbewegung und/oder Austauch- und Eintauchbewegungen des Plankupplungswerkstücks vorgenommen wird/werden, bevor ein weiterer Bearbeitungsschritt folgt, werden diese Relativbewegungen zusammenfassend als relative Einstellbewegung(en) bezeichnet.

Eine relative Einstellbewegung umfasst bei allen Ausführungsformen das Vornehmen einer Austauchbewegung, einer Teilungsbewegung und einer Eintauchbewegung (z.B. von einer ersten Zahnlücke zu einer unmittelbar benachbarten Zahnlücke). Eine relative Einstellbewegung kann bei allen Ausführungsformen das Vornehmen einer Austauchbewegung, einer Teilungsbewegung, das Verändern der Maschineneinstellung und das Vornehmen einer Eintauchbewegung umfassen.

Vorzugsweise wird beim Semi-Completing Einzelteilverfahren der Erfindung in allen Ausführungsformen ein Maschinengrundwinkel vorgegeben, der bei der ersten und der zweiten Maschineneinstellung identisch ist. Dieser Maschinengrundwinkel wird so vorgegeben, dass der/die Schneidkopf/köpfe des Verzahnwerkzeugs entlang einer schrägen Bahn durch die Zahnlücke des Plankupplungswerkstücks geführt wird/werden. Analog kann auch beim Einsatz einer Topfschleifscheibe der Maschinengrundwinkel so vorgegeben werden, dass die Topfschleifscheibe entlang einer schrägen Bahn durch die Zahnlücke des Plankupplungswerkstücks geführt wird.

Je nach Ausführungsform, kann das Verfahren der Erfindung eine der folgenden beiden Verfahrensabläufe K1 bis K4 oder L1 bis L6 haben:
K1. Es wird eine erste Flanke einer Zahnlücke des Plankupplungswerkstücks mit einer ersten Schneide oder mit einer ersten Schleiffläche des Werkzeugs fertig bearbeitet während quasi zeitgleich eine zweite, gegenüberliegende Flanke derselben Zahnlücke mit einer zweiten Schneide oder mit einer zweiten Schleiffläche des Werkzeugs vorbearbeitet wird. Dies erfolgt z.B. in einer ersten (Maschinen-)Einstellung,
K2. Dann wird im Rahmen einer relativen Einstellbewegung z.B. die (Maschinen-)Einstellung verändert und es folgt eine Bearbeitung derselben Zahnlücke z.B. mit einer zweiten (Maschinen-) Einstellung. Im Rahmen dieser Bearbeitung wird die zweite, gegenüberliegende Flanke der Zahnlücke mit einer zweiten Schneide oder mit der zweiten Schleiffläche des Werkzeugs fertig bearbeitet,
K3. Dann erfolgt als relative Einstellbewegung z.B. eine Austauchbewegung, eine Teilungsbewegung (z.B. um eine Zahnlücke) und eine Eintauchbewegung des Plankupplungswerkstücks,
K4. Es werden die Schritte K1. bis K3. wiederholt, bis alle Zahnflanken fertig bearbeitet wurden.

Der Verfahrensablauf K1 bis K4 wird hier auch als lückenbasiertes Semi-Completing Einzelteilverfahren bezeichnet, da hier Lücke für Lücke bearbeitet wird.

Das Verstellen der (Maschinen-) Einstellung im Schritt K2 kann z.B. in der Zahnlücke oder ausserhalb der Zahnlücke erfolgen. Falls das Verstellen ausserhalb der Zahnlücke erfolgt, so kann die relative Einstellbewegung eine Austauchbewegung, eine Verstellung der (Maschinen-) Einstellung und eine Eintauchbewegung umfassen.

Der Verfahrensablauf L1 bis L6 kann die folgenden Schritte umfassen:
L1. Es wird eine erste Flanke einer ersten Zahnlücke des Plankupplungswerkstücks mit einer ersten Schneide oder mit einer ersten Schleiffläche des Werkzeugs fertig bearbeitet, während quasi zeitgleich eine zweite, gegenüberliegende Flanke der ersten Zahnlücke mit einer zweiten Schneide oder mit einer zweiten Schleiffläche des Werkzeugs vorbearbeitet wird. Dies erfolgt z.B. in einer ersten (Maschinen-)Einstellung,
L2. Dann erfolgt als relative Einstellbewegung eine Teilungsbewegung z.B. eine Austauchbewegung, eine Teilungsbewegung (z.B. um eine Zahnlücke) und eine Eintauchbewegung des Plankupplungswerkstücks,
L3. Es wird eine erste Flanke einer weiteren Zahnlücke (z.B. eine Zahnlücke, die unmittelbar nach der ersten Zahnlücke folgt) des Plankupplungswerkstücks mit einer ersten Schneide oder mit der ersten Schleiffläche des Werkzeugs fertig bearbeitet, während quasi zeitgleich eine zweite, gegenüberliegende Flanke der weiteren Zahnlücke mit einer zweiten Schneide oder mit der zweiten Schleiffläche des Werkzeugs vorbearbeitet wird. Dies erfolgt in einer ersten (Maschinen-)Einstellung,
L4. Dann erfolgt als relative Einstellbewegung eine Teilungsbewegung z.B. eine Austauchbewegung, eine Teilungsbewegung (z.B. um eine Zahnlücke) und eine Eintauchbewegung des Plankupplungswerkstücks,
L5. Die Schritte L1. bis L4. werden wiederholt, bis alle Zahnlücken erstmals bearbeitet wurden,
L6. Dann wird jede der Zahnlücken, die zuvor mit der ersten (Maschinen-) Einstellung bearbeitet wurde, einer Bearbeitung mit der zweiten (Maschinen-)Einstellung unterzogen, wobei auch hier zwischen den einzelnen Zahnlücken wiederum relative Einstellbewegungen erfolgen.

Das Verstellen der (Maschinen-) Einstellung im Schritt L6 kann z.B. in der Zahnlücke oder ausserhalb der Zahnlücke erfolgen.

Das Verfahren der Schritte L1. bis L6 wird hier auch als lückenübergreifendes Semi-Completing Einzelteilverfahren bezeichnet, bei dem z.B. in einem ersten Durchgang alle konkaven Zahnflanken aller Zahnlücken fertig bearbeitet werden, bevor dann in einem zweiten Durchgang alle konvexen Zahnflanken aller Zahnlücken fertig bearbeitet werden.

Das Semi-Completing Verfahren gemäß K1. bis K4. zeichnet sich dadurch aus, dass pro Zahnlücke zwei Bearbeitungsschritte kurz nacheinander ausgeführt werden, bevor als relative Einstellbewegungen eine Austauchbewegung, eine Teilungsbewegung sowie eine Eintauchbewegung folgen.

Es geht bei der vorliegenden Erfindung um ein sogenanntes Semi-Completing Einzelteilverfahren, das bisher nicht bei Plankupplungen angewendet wurde. Hierbei handelt es sich um ein Einzelteilverfahren, das zum Fräsen und/oder Schleifen der Verzahnungen von Plankupplungswerkstücken eingesetzt wird. Die beiden gegenüberliegenden Flanken einer Zahnlücke des zu bearbeitenden Plankupplungswerkstücks werden mit dem gleichen Werkzeug aber mit unterschiedlichen Maschineneinstellungen bearbeitet (durch Schneiden oder Schleifen).

Das Semi-Completing Einzelteilverfahren der Erfindung wird als diskontinuierliches Verfahren eingestuft, da jeweils von Lücke zu Lücke Teilungsbewegungen erforderlich sind.

Das Semi-Completing Einzelteilverfahren der Erfindung kann bei unverzahnten Plankupplungswerkstücken oder auch bei vorverzahnten Plankupplungswerkstücken zum Einsatz kommen.

Das Semi-Completing Einzelteilverfahren der Erfindung kann mit einer Ein-Schnitt-Strategie eingesetzt werden, da die Plankupplungswerkstücke eine geringe Zahnhöhe (verglichen mit Kegelradwerkstücken) haben. Aufgrund der geringen Zahnhöhe muss bei einem Plankupplungswerkstück pro Zahnflanke nur relativ wenig Material abgetragen werden. Daher kann eine Zahnlücke mit nur einer Tauchbewegung in einer ersten Maschineneinstellung und mit nur einer Tauchbewegung in einer zweiten Maschineneinstellung fertig bearbeitet werden.

Das Semi-Completing Einzelteilverfahren der Erfindung hat den Vorteil, dass durch dieses Verfahren Plankupplungen hergestellt werden können, die in Sachen Zähnezahl eine höhere Flexibilität haben als die eingangs genannten Curvic® Couplings. Ausserdem lassen sich die Plankupplungen der Erfindung schleifen, d.h. die Zahnflanken der Plankupplungen der Erfindung können bei Bedarf hartfeinbearbeitet werden.

Das Semi-Completing Einzelteilverfahren der Erfindung hat auch den Vorteil, dass mit einem standardisierten Werkzeug mehrere unterschiedliche Werkstücke bearbeitet werden können, die alle einem definierten Modulbereich zugeordnet sind.

Vorzugsweise wird gemäß Erfindung ein Satz mit mehreren standardisierten Werkzeugen angeboten/bereitgestellt, um mit diesem Satz Plankupplungen mit unterschiedlichem Modul bearbeiten zu können. Der Satz standardisierter Werkzeuge umfasst nur eine kleine Zahl an verschiedenen Werkzeugen, was bedeutet, dass man in diesem Fall in Sachen Kraftschluss (d.h. in Sachen Tragbild) zwischen den beiden Hälften einer Plankupplung gewisse Abstriche machen muss. Anders als bei Kegelradpaaren, geht es hier nicht um das Wälzen von zwei Kegelrädern, sondern es geht um einen quasi-statischen Kraftschluß zwischen zwei Plankupplungselementen.

Die Nennradien der standardisierten Werkzeuge eines Werkzeugsatzes der Erfindung können z.B. konstant sein. Man kann dann z.B. mit einem ersten Werkzeug Plankupplungsverzahnungen mit Modul 4,5 bis 5,5 und mit einem zweiten Werkzeug Plankupplungsverzahnungen mit Modul 5,5 bis 6,5 bearbeiten.

Die Erfindung ermöglicht es das Werkzeugsortiment zu vereinfachen, da man mit einem Werkzeug mehrere leicht unterschiedliche Werkstücke (innerhalb eines definierten Modulbereichs) bearbeiten kann. Leicht unterschiedliche Werkstücke (die hier auch als ähnliche Werkstücke bezeichnet werden) im Sinne der Erfindung sind Werkstücke, deren Modul nur wenig voneinander abweicht, d.h. der Modul des Werkstücks sollte zum selben Modulbereich gehören.

Vorzugsweise kommt im Rahmen der Erfindung ein (Stirn-) Messerkopf zum Einsatz, der (stirnseitig) mit mindestens einem Stabmesser bestückt ist, wobei das Stabmesser einen Schneidkopf aufweist, an dem eine Aussenschneide und eine Innenschneide so angeordnet sind, dass sich eine positive Spitzenweite zwischen diesen beiden Schneiden ergibt.

Um das Verfahren der Erfindung produktiver zu machen, kommt vorzugsweise bei allen Ausführungsformen ein (Stirn-)Messerkopf zum Einsatz, der (stirnseitig) mit mehreren Stabmessern bestückt ist, wobei jedes dieser Stabmesser einen Schneidkopf aufweist, an dem eine Aussenschneide und eine Innenschneide so angeordnet sind, dass sich eine positive Spitzenweite zwischen diesen beiden Schneiden ergibt. Die Stabmesser können bei allen Ausführungsformen in einem gleichmäßigen oder ungleichmäßigen Winkelabstand (stirnseitig) am Messerkopf angeordnet sein.

Es ist ein weiterer Vorteil der Erfindung, dass die Balligkeit der Zähne der Plankupplungen der Erfindung im Wesentlichen frei gewählt werden kann.

Es ist ein weiterer Vorteil der Erfindung, dass sich die Flanken der Plankupplungen unabhängig voneinander optimieren lassen.

Das Semi-Completing Einzelteilverfahren der Erfindung hat den Vorteil, dass es auf (konventionellen) Kegelrad-Maschinen eingesetzt werden kann.

Das Semi-Completing Einzelteilverfahren der Erfindung eignet sich besonders für Kleinserien, da man eines der standardisierten Werkzeuge nehmen kann, um eine gewünschte Verzahnung zu bearbeiten.

Das Semi-Completing Einzelteilverfahren der Erfindung hat den Vorteil, dass Werkzeuge eingesetzt werden können, die einfacher sind als bei den eingangs erwähnten Zyklo-Palloid, Oerlikon- und Curvic®-Coupling Verfahren.

### ZEICHNUNGEN

Ein Ausführungsbeispiel der Erfindung wird im Folgenden unter Bezugnahme auf die Zeichnungen näher beschrieben.
- **FIG. 1A**: zeigt eine Draufsicht einer ersten Plankupplung gemäß Erfindung, wobei nur 4 Zähne und 3 Zahnlücken dargestellt sind (die 4 Zähne sind in Fig. 1A durch ein Muster hervorgehoben);
- **FIG. 1B**: zeigt einen Axialschnitt der ersten Plankupplung nach Fig. 1A;
- **FIG. 1C**: zeigt die Teilebene des Werkzeuges durch den Auslegungspunkt, wobei die Teilebene des Werkzeuges gegenüber der Teilebene des Werkstückes um den Maschinengrundwinkel κ geneigt ist;
- **FIG. 1D**: zeigt einen vergrösserten Ausschnitt der Fig. 1C, wobei anhand dieser Vergrößerung weitere Details gezeigt werden;
- **FIG. 1E**: zeigt eine perspektivische Ansicht einer einzelnen Zahnlücke einer Plankupplung der Erfindung;
- **FIG. 2A**: zeigt einen schematisierten Schnitt zweier Schneiden, wobei diese Darstellung zur Herleitung der Erfindung dient;
- **FIG. 2B**: zeigt einen schematisierten Normalschnitt eines Schneidkopfes der Erfindung;
- **FIG. 3**: zeigt eine schematisierte Perspektivansicht eines beispielhaften (Stab-)Messers der Erfindung;
- **FIG. 4**: zeigt eine Draufsicht eines beispielhaften Stabmesserkopfs, der hier mit 12 Stabmessern bestückt ist;
- **FIG. 5**: zeigt eine stark schematisierte Seitenansicht einer beispielhaften Topfschleifscheibe, wobei ein Teil der Topfschleifscheibe im Schnitt dargestellt ist;
- **FIG. 6A**: zeigt eine Ansicht der Teilebene einer Plankupplung gemäß Erfindung vor dem Durchführen des erfindungsgemäßen Verfahrens;
- **FIG. 6B**: zeigt eine Ansicht der Teilebene der Plankupplung der Fig. 6A, nachdem die konvexe Zahnflanke einer ersten Zahnlücke fertig bearbeitet wurde;
- **FIG. 6C**: zeigt eine Ansicht der Teilebene der Plankupplung der Fig. 6B, nachdem die konvexe Zahnflanke einer zweiten Zahnlücke fertig bearbeitet wurde;
- **FIG. 6D**: zeigt eine Ansicht der Teilebene der Plankupplung der Fig. 6C, nachdem die konvexen Zahnflanken aller Zahnlücken fertig bearbeitet wurden;
- **FIG. 6E**: zeigt eine Ansicht der Teilebene der Plankupplung der Fig. 6D, nachdem die konkave Zahnflanke der ersten Zahnlücke fertig bearbeitet wurde;
- **FIG. 6F**: zeigt eine Ansicht der Teilebene der Plankupplung der Fig. 6E, nachdem die konkaven Zahnflanken aller Zahnlücken fertig bearbeitet wurden;
- **FIG. 7A**: zeigt eine Ansicht der Teilebene einer Plankupplung gemäß Erfindung vor dem Durchführen des erfindungsgemäßen Verfahrens;
- **FIG. 7B**: zeigt eine Ansicht der Teilebene der Plankupplung der Fig. 7A, nachdem die konvexe Zahnflanke einer ersten Zahnlücke fertig bearbeitet wurde;
- **FIG. 7C**: zeigt eine Ansicht der Teilebene der Plankupplung der Fig. 7B, nachdem die konkave Zahnflanke der ersten Zahnlücke fertig bearbeitet wurde;
- **FIG. 7D**: zeigt eine Ansicht der Teilebene der Plankupplung der Fig. 7C, nachdem die konvexe Zahnflanke einer zweiten Zahnlücke fertig bearbeitet wurde;
- **FIG. 7E**: zeigt eine Ansicht der Teilebene der Plankupplung der Fig. 7D, nachdem die konkave Zahnflanke der zweiten Zahnlücke fertig bearbeitet wurde;
- **FIG. 7F**: zeigt eine Ansicht der Teilebene der Plankupplung der Fig. 7E, nachdem die Zahnflanken aller Zahnlücken fertig bearbeitet wurden.

Im Rahmen der vorliegenden Erfindung können sowohl Verzahnwerkzeuge 100 mit definierten Schneiden als auch Schleifwerkzeuge 200 mit Schleifflächen eingesetzt werden. Im Zusammenhang mit der folgenden Beschreibung werden zuerst Details von Ausführungsformen beschrieben, bei denen Messerkopf-Verzahnwerkzeuge 100 oder Vollwerkzeuge zum Einsatz kommen. Anschliessend wird das Beschriebene auch auf Schleifwerkzeuge 200 erweitert.

Das Bezugszeichen 10 wird hier sowohl für das Plankupplungswerkstück als auch für die fertig bearbeiteten Plankupplungselemente verwendet.

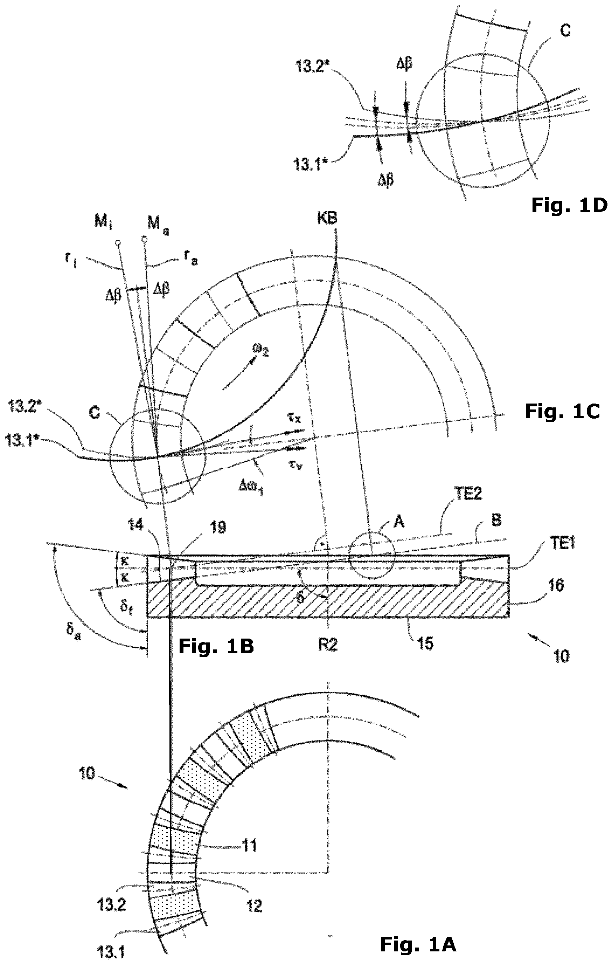

In Fig. 1A ist eine Draufsicht eines Abschnitts eines ersten Plankupplungswerkstücks 10 der Erfindung gezeigt. Die Zähne 11 sind mit einem Muster versehen, um sie optisch hervor zu heben. Es sind 4 Zähne 11 und 3 Zahnlücken 12 zu erkennen. Fig. 1B zeigt einen Axialschnitt des ersten Plankupplungswerkstücks 10. Die kurzen strichlierten Kurvenabschnitte zeigen in Fig. 1A die Flankenlinien der konkaven Flanken 13.2 und der konvexen Flanken 13.1 in der Teilebene TE1 des Plankupplungswerkstückes 10, wobei jeweils eine konkave Flanke 13.2 zusammen mit einer konvexen Flanke 13.1 einen Zahn 11 definieren. Die Werkzeugdrehbewegung ist in Fig. 1C mit ω₂ bezeichnet. Das Verzahnwerkzeug 100 ist nicht in den Figuren 1A - 1E gezeigt. Es sind hier jedoch die Bewegungen des Verzahnwerkzeugs 100 dargestellt.

Die relative Lage des Verzahnwerkzeugs 100 in Bezug zum Plankupplungswerkstück 10 ist durch die momentane Einstellung der Maschine definiert, in der das Plankupplungswerkstück 10 fräsend bearbeitet wird. Diese Einstellung wird hier als erste Maschineneinstellung bezeichnet. Die fräsende Bearbeitung ergibt sich dadurch, dass das Verzahnwerkzeug 100 um ein Rotationszentrum Mᵢ oder Mₐ drehangetrieben wird, wie in Fig. 1C durch die Werkzeugdrehbewegung ω₂ dargestellt.

Das Semi-Completing Einzelteilverfahren der Erfindung ist ein diskontinuierliches Verfahren, da sich das Plankupplungswerkstück 10 während der Bearbeitung (d.h. der Bearbeitung einer jeden Zahnflanke) mit dem Verzahnwerkzeug 100 nicht dreht.

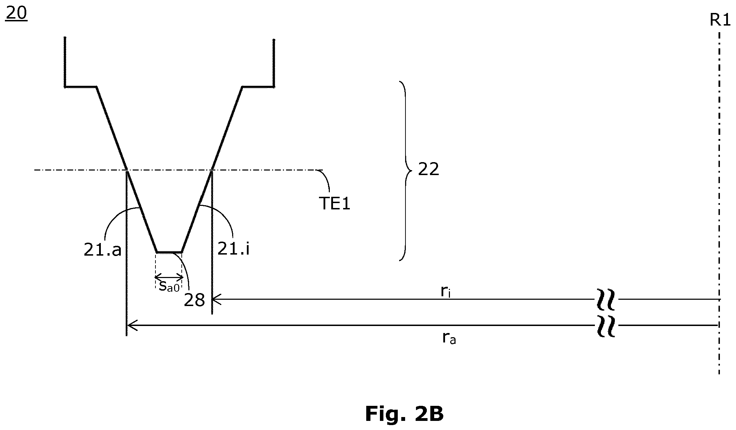

Im Koordinatensystem des Werkzeugs 100, bewegen sich die Schneidköpfe 22 der Messer 20 (siehe Fig. 2B) entlang von kreisförmigen Flugkreisen, deren Radius vom Abstand des Schneidkopfs 22 von der Werkzeugrotationsachse R1 bestimmt ist. Während des Verfahrens der Erfindung ist das Werkzeug 100 gegenüber dem Plankupplungswerkstück 10 schräg gestellt. Daher bewegen sich die Schneidköpfe 22 beim Drehantreiben ω₂ des Verzahnwerkzeugs 100 entlang elliptischer Flugbahnen, wenn man deren Bewegung aus der Position des Plankupplungswerkstücks 10 betrachtet.

Größen, die hier mit einem v bezeichnet sind, beziehen sich jeweils auf die konkaven Flanken 13.2 des Plankupplungswerkstücks 10. Größen, die hier mit einem x bezeichnet sind, beziehen sich jeweils auf die konvexen Flanken 13.1 des Plankupplungswerkstücks 10. Entsprechend beziehen sich Größen, die hier mit einem i bezeichnet sind, auf Innenscheiden oder Innenschleifflächen und Größen, die hier mit einem a bezeichnet sind, auf Außenscheiden oder Außenschleifflächen.

In Fig. 1C ist von dem Verzahnwerkzeug 100 lediglich ein Abschnitt eines Kreisbogens gezeigt, der durch den Werkzeugradius rᵢ definiert und hier mit dem Bezugszeichen KB versehen ist. Der Werkzeugradius rᵢ ist den Innenschneiden 21.i des Verzahnwerkzeugs 100 zugeordnet, die zur Bearbeitung der konvexen Zahnflanken 13.1 dienen und der Werkzeugradius rₐ ist den Innenschneiden 21.a des Verzahnwerkzeugs 100 zugeordnet, die zur Bearbeitung der konkaven Zahnflanken 13.2 dienen.

Es ist hier anzumerken, dass Fig. 1C den Spezialfall ohne Werkzeugneigung zeigt (d.h. hier ist τ =0). Die Bahn KB des Verzahnwerkzeugs 100 ist daher in der Teilebene TE durch den Auslegungspunkt 19 (siehe Fig. 1B) ein Kreis und die Fußbahn B der Messerspitzen ist in Fig. 1B eine Gerade. Mit einer Werkzeugneigung (d.h. mit τ ≠ 0) wird die Bahn KB zu einer Ellipse und die Fußbahn B der Messerspitzen wird ebenfalls zu einer Ellipse. Das Verzahnwerkzeug 100 wird um den Winkel τ um den Drehvektor, der senkrecht zum Werkzeugradius steht, geneigt.

Das Rotationszentrum zur Bearbeitung der konvexen Zahnflanken 13.1 ist Mᵢ und zur Bearbeitung der konkaven Zahnflanken 13.2 ist Mₐ (siehe Fig. 1C). Aus der Tatsache, dass es zwei unterschiedliche Rotationszentren Mᵢ und Mₐ gibt, kann man erkennen, dass die konvexen Zahnflanken 13.1 mit einer anderen Maschineneinstellung (z.B. mit einer ersten Maschineneinstellung) bearbeitet werden als konkaven Zahnflanken 13.2 (die z.B. mit einer zweiten Maschineneinstellung bearbeitet werden).

Die Bezeichnungen "erste Maschineneinstellung" und "zweite Maschineneinstellung" soll keine Reihenfolge vorgeben, sondern diese Bezeichnungen dienen lediglich dazu die beiden Maschineneinstellungen unterscheiden zu können.

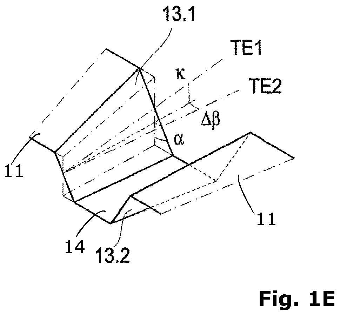

Beim Schneiden der konkaven Flanken 13.2 ergibt sich aufgrund einer anderen Maschineneinstellung in der Teilebene des Werkzeugs TE2 eine epizykloide Flugbahn 13.2* der Außenschneide 21.a. In Fig. 1A und Fig. 1E sind die kreisbogenförmigen Flankenlinien strichpunktiert dargestellt. Die Kreisbögen in der Werkzeugteilebene der konkaven Flanken sind in Fig. 1C und 1E gestrichelt dargestellt und weichen von den Flankenlinien der Teilebene des Werkstücks TE1 um die Spiralwinkeldifferenz Δβ ab.

In der Fig. 1C sind die Flugkreise in die Zeichenebene projiziert, wobei die Zeichenebene der Teilebene TE1 des Plankupplungswerkstücks 10 entspricht. Da es sich bei den Flugbahnen um Ellipsen handelt, wie bereits erwähnt, sind deren Radien rᵢ und rₐ veränderlich, wenn man die Flugbahnen aus einem Koordinatensystem des Plankupplungswerkstücks 10 betrachtet. Wichtig ist für das fräsende Bearbeiten (oder für das schleifende Bearbeiten) der konvexen Flanken 13.1 der effektive Radius der Flugbahn 13.1* der Innenschneide 21.i des Schneidkopfs 22, der als Normale an der konvexen Flanke 13.1 des Plankupplungswerkstücks 10 in der Teilebene TE1 definiert ist.

Es ist hier festzustellen, dass die Darstellung der Figuren 1A, 1C, 1D und 1E schematisch ist. Der Verlauf der gezeigten Flugbahnen ist übertrieben dargestellt.

Während die sogenannte Innenschneide 21.i des Schneidkopfs 22 sich entlang der Flugbahn 13.1* bewegt, bewegt sich die Aussenschneide 21.a desselben Schneidkopfs 22 entlang der Flugbahn 13.2*. Dieser Flugbahn 13.2* ist an der konkaven Flanke 13.2 des Plankupplungswerkstücks 10 in der Teilebene TE1 ein entsprechender effektiver Radius zugeordnet. Es gelten hier die folgenden Bedingungen:
A: Die beiden Flugbahnen 13.1* und 13.2* liegen in einer gemeinsamen Ebene, was sich daraus ergibt, dass an jedem Schneidkopf 22 eine Innenschneide 21.i und eine Aussenschneide 21.a vorgesehen ist und dass die Schneidköpfe 22 entlang eines Kreises am Werkzeug 100 angeordnet sind.
B: Die beiden Flugbahnen 13.1* und 13.2* liegen beide konzentrisch zu dem jeweiligen Rotationszentrum Mᵢ und Mₐ.
C: Die Innenschneide 21.i und die Aussenschneide 21.a eines gemeinsamen Schneidkopfs 22 bewegen sich beim Bearbeiten des Materials des Plankupplungswerkstücks 10 mit derselben Winkelgeschwindigkeit.

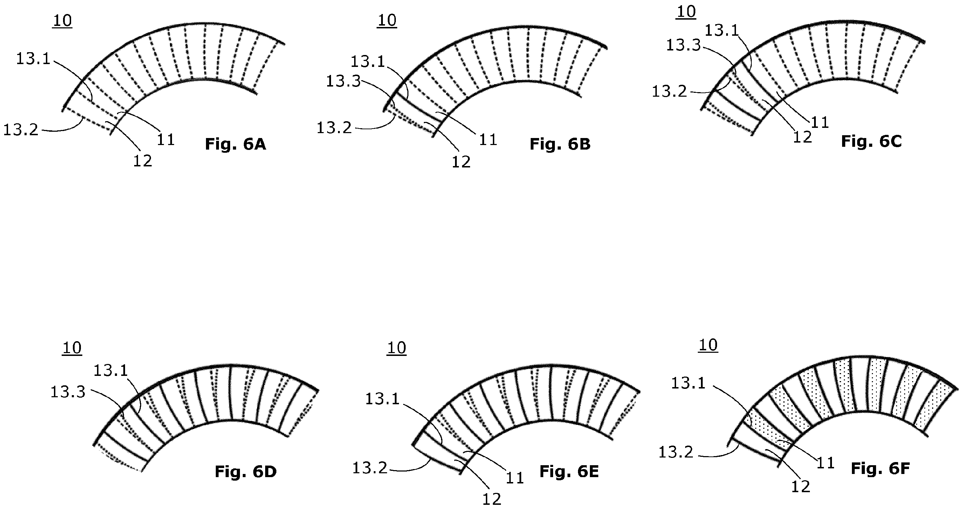

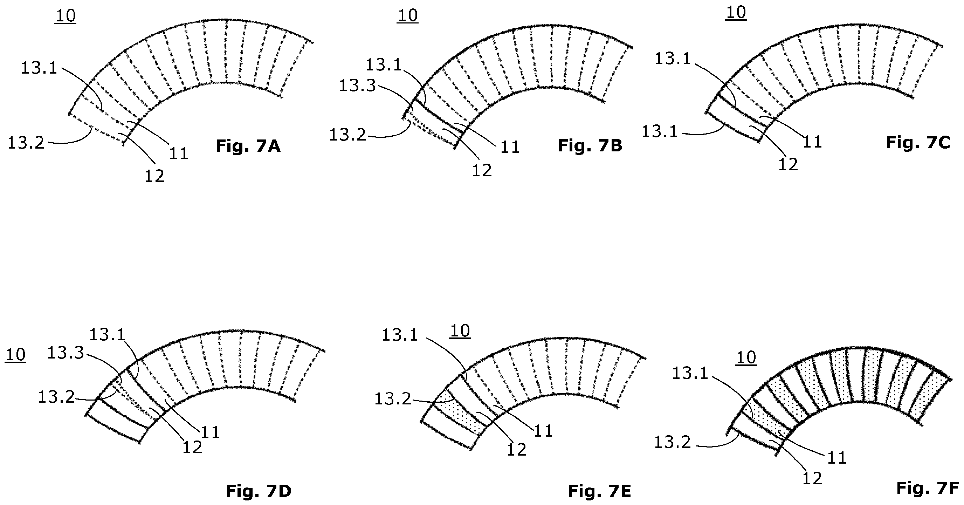

Je nach Verfahren kann die Bearbeitung der Zahnflanken bei allen Ausführungsformen mit einem konstanten Tauchvorschub, mit einem veränderlichen Tauchvorschub (z.B. degressiv abnehmend) oder mit mehreren Schritten erfolgen. Da es sich typischerweise um ein Plankupplungswerkstück 10 handelt, das nicht vorverzahnt wurde, wird zeitgleich zum Fertigbearbeiten der konvexen Zahnflanke 13.1 die konkave Zahnflanke 13.2 derselben Zahnlücke 12 mit einer Aussenschneide 21.a desselben Schneidkopfs 22 des Werkzeugs 100 bearbeitet. Da in dieser Phase des Verfahrens der Erfindung die konkave Zahnflanke 13.2 noch nicht ihre endgültige Form erhält, wird diese Bearbeitung, die im Rahmen der ersten Maschineneinstellung erfolgt, auch als Vorbearbeitung bezeichnet. Weitere Details hierzu sind z.B. den Figuren 6A bis 6F und 7A bis 7F zu entnehmen.

Es ist darauf zu achten, dass die Dimension des Schneidkopfs 22 (speziell die Lage der Innenschneide 21.i und der Aussenschneide 21.a, sowie die Spitzenweite sₐ₀) und die Maschinenkinematik so vorgegeben werden, dass die Aussenschneide 21.a beim Vorbearbeiten der konkaven Zahnflanke 13.2 nicht zu weit in das Material des Plankupplungswerkstücks 10 schneidet. In Fig. 6B und 7B ist eine vorbearbeitete konkave Zahnflanke mit dem Bezugszeichen 13.3 versehen.

Gemäß Erfindung wird nun eine zweite Maschineneinstellung in der Maschine eingestellt und es folgt der nachfolgend beschriebene Schritt. Die konkave Zahnflanke 13.2 derselben Zahnlücke 12 wird dann in diesem Schritt mit einer Aussenschneide 21.a des Verzahnwerkzeugs 100 fertig bearbeitet.

Je nach Bedarf kann ein lückenbasierter Ansatz (siehe z.B. Fig. 7A bis 7F) oder ein lückenübergreifender Ansatz (siehe Fig. 6A bis 6F) zur Anwendung kommen. Details werden später beschrieben.

Vorzugsweise wird der Schneidkopf 22 des Verzahnwerkzeugs 100 bei allen Ausführungsformen entlang einer schrägen Bahn B (siehe Fig. 1B) durch die Zahnlücke 12 der Plankupplung 10 geführt. Dieser Aspekt ist beim Vorgeben der ersten und der zweiten Maschineneinstellung zu berücksichtigen. Der Maschinengrundwinkel κ, der den Verlauf der schrägen Bahn B beeinflusst, ist idealerweise bei beiden Maschineneinstellung gleich, um einen Versatz oder eine Stufe im Bereich des Zahngrundes 14 der Zahnlücken 12 zu vermeiden.

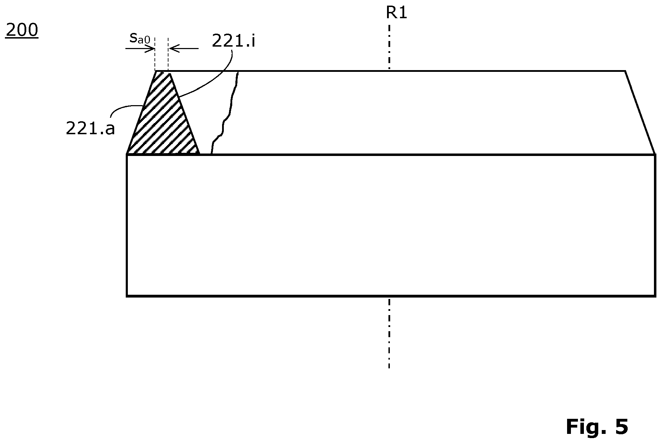

Aufgrund der Tatsache, dass beim erfindungsgemäßen Verfahren die Schneiden 21.i, 21.a des Verzahnwerkzeugs 100 auf fest definierten Flugkreisen des Verzahnwerkzeugs 100 sitzen, die konzentrisch zueinander liegen, kann dass Verzahnwerkzeug 100 auch durch ein Schleifwerkzeug 200 ersetzt werden, das keine definierten Schneidkanten aufweist. Aufgrund der Gesamtkonstellation eignet sich eine Topfschleifscheibe als Schleifwerkzeug 200 (siehe Fig. 5), wobei statt der erwähnten Innenschneiden 21.i eine Innenschleiffläche 221.i und statt der erwähnten Aussenschneiden 21.a eine Aussenschleiffläche 221.a zum Einsatz kommen (siehe Fig. 5). Dort, wo die Schneidkanten 21.i, 21.a des Verzahnwerkzeugs 100 eine positive Spitzenweite sₐ₀ definieren (siehe Fig. 2B), weist die Topfschleifscheibe 200 eine positive Profilweite sₐ₀ auf. Details hierzu sind der schematischen Fig. 5 zu entnehmen. Die Innenschleiffläche 221.i und die Aussenschleiffläche 221.a liegen bei der Topfschleifscheibe konzentrisch zur Werkzeugrotationsachse R1.

Eine Plankupplung 10, die nach dem Verfahren der Erfindung gefertigt wurde, zeichnet sich durch folgende Merkmale aus. Es wird hier vor allem auf die Fig. 1B Bezug genommen. Eine solche Plankupplung 10 hat bei allen Ausführungsformen einen Teilkegelwinkel δ, der 90 Grad beträgt. In Fig. 1B ist die entsprechende Teilebene TE1 durch eine strich-punktierte Linie dargestellt, die senkrecht zur Werkstückrotationsachse R2 verläuft.

Die Plankupplung 10 der Erfindung zeichnet sich bei allen Ausführungsformen insbesondere durch die folgenden Merkmale aus:
- sie hat Zähne 11 mit veränderlicher Zahnkopfhöhe, wie man in Fig. 1B und 1E erkennen kann, d.h. die Zähne 11 sind konisch;
- die Zähne 11 können durch Fräsen und/oder durch Schleifen bearbeitet werden;
- die Zähne 11 können im Rahmen einer optionalen Hartfeinbearbeitung nachgeschliffen (feinbearbeitet) werden;
- die Zahnlücken 12 haben eine Fußebene, respektive einen Zahngrund 14, der geneigt ist, wie man in Fig. 1B und 1E erkennen kann. Die Neigung des Zahngrunds 14 ergibt sich unter anderem daraus, dass bei Bedarf beim Verfahren der Erfindung der Maschinengrundwinkel κ so eingestellt wird, dass der Schneidkopf 22 eines Messers 20 des Verzahnwerkzeugs 100 entlang einer schrägen Bahn B (wie bereits erwähnt) durch die Zahnlücke 12 der Plankupplung 10 geführt wird. Diese schräge Bahn B liegt in einem Axialschnitt der Plankupplung 10 (siehe Fig. 1B) schräg zur Teilebene TE1. Der Fußkegelwinkel δ_{f} am Zahngrund 14 beträgt hier δ_{f} = δ - κ. Die schräge Bahn B wird bewusst so gewählt, dass ein rückwärtiges Anschneiden der Plankupplung 10 durch einen weiterlaufenden Schneidkopf 22 vermieden wird. Die Bahn B repräsentiert den Verlauf der Schneidspitze 23 des Schneidkopfs 22. In Fig. 1B ist im Bereich A zu erkennen, dass die Schneidspitze 23 des Schneidkopfs 22 so entlang der schrägen Bahn B durch den 3-dimensionalen Raum geführt wird, dass die Schneidspitze 23 nur im Bereich der momentan zu bearbeitenden Zahnlücke Material des Plankupplungswerkstücks 10 abträgt.
- Der Zahngrund 14 der Plankupplungswerkstück 10 hat eine Steigung, die von der Ferse (d.h. ausgehend von der Mantelfläche 16) in Richtung der Werkstückrotationsachse R2 ansteigt.
- Die konvexen und die konkaven Zahnflanken 13.1, 13.2 haben keinen kreisbogenförmigen sondern einen elliptischen Verlauf.

Im Zusammenhang mit der Fig. 1B sei erwähnt, dass es sich bei der Projektion der schrägen Bahn B in die Zeichenebene nicht um eine Gerade sondern um eine leicht gekrümmte Bahn handelt. Es ist hier daher davon die Rede, dass diese schräge Bahn B in einem Axialschnitt durch das Plankupplungswerkstück 10 im Wesentlichen parallel zum Verlauf des Zahngrundes 14 der momentan zu bearbeitenden Zahnlücke 12 liegt.

Ausserdem haben die Zahnflanken der Plankupplungen 10 der Erfindung eine Balligkeit, die Zahnflanken haben eine Kreisbogen-Form und die Plankupplungen 10 sind selbstzentrierend.

Die weiteren Details der Plankupplung 10 der Figuren 1A - 1E sind nicht erfindungscharakteristisch und sind daher nur als Beispiele zu verstehen. Die beispielhaft gezeigte Plankupplung 10 hat z.B. eine rückwärtige Einbaufläche 15, die komplett eben sein kann. An der Ferse ist zwischen der Mantelfläche 16 und der Einbaufläche 15 in diesem Beispiel keine Übergangsfläche vorgesehen, wie das teilweise üblich ist. Die Mantelfläche 16 geht hier also mit einem rechten Winkel in die Einbaufläche 15 über. Der Kopfkegelwinkel δₐ ist bei dem gezeigten Beispiel grösser als 90 Grad und der Fußkegelwinkel δ_{f} ist kleiner als 90 Grad. Die Zahnhöhe nimmt von der Ferse zur Zehe (d.h. von außen nach innen) kontinuierlich ab. Es gibt jedoch auch Ausführungsformen der Erfindung, bei denen der Kopfkegelwinkel δₐ gleich 90 Grad beträgt (hier jedoch nicht gezeigt).

Die Plankupplung 10 der Fig. 1A hat eine rechtsspiralige Zahnform. Ein damit zu paarendes Gegenstück müsste eine linksspiralige Zahnform haben.

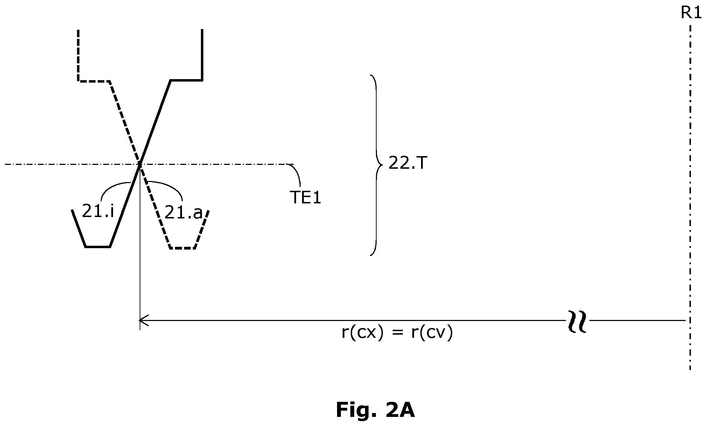

Anhand der Fig. 2A wird ein theoretischer Zwischenschritt beschrieben, der zur vorliegenden Erfindung führt. Um zwei Kupplungshälften miteinander paaren zu können, müssen die Zahnflanken zueinander konjugiert sein. Aus der Verzahnungstheorie ergibt sich in diesem Fall, dass sich zur Erzeugung von konjugierten Zahnflanken im Einzelteilverfahren die Werkzeugradien in der Teilebene TE1 schneiden müssen. In Fig. 2A ist ein entsprechender Normalschnitt durch einen theoretischen Schneidkopf 22.T gezeigt. Es ist die theoretische Lage der Innenschneide 21.i als durchgezogener Linienzug gezeigt. Die theoretische Lage der Aussenschneide 21.a ist als strichlierter Linienzug gezeigt. Man kann erkennen, dass sich die beiden Schneiden 21.i und 21.a in der Teilebene TE1 schneiden. Um dies in der Praxis umzusetzen, müssten die Innenschneide 21.i an einem ersten Schneidkopf und die Aussenschneide 21.a an einem zweiten Schneidkopf angeordnet werden. Anders ausgedrückt, müssten man im Teilverfahren die Plankupplungswerkstücke mit zwei verschiedenen Werkzeugen verzahnen, um die Bedingung der Fig. 2A zu erfüllen.

Die Erfindung geht hier bewusst einen anderen Weg, da sie darauf ausgelegt ist eine möglichst kostengünstige Lösung bereit zu stellen. Um den Werkzeugaufwand gegenüber vorbekannten Ansätzen zu reduzieren, war es eine Zielsetzung der Erfindung mit möglichst wenigen unterschiedlichen Werkzeugen auszukommen.

In Fig. 2B ist ein Normalschnitt durch einen Schneidkopf 22 eines Werkzeugs 100 der Erfindung gezeigt. Es handelt sich um eine schematische Darstellung, die zur Definition weiterer Merkmale der Erfindung dient. Der Schneidkopf 22 eines Werkzeugs 100 der Erfindung wird im Wesentlichen durch zwei Schneidkanten, (Außenschneide 21.a sowie Innenschneide 21.i genannt) und die Schneidspitze 23 definiert. Anders als in Fig. 2A, wurden die Außenschneide 21.a und die Innenschneide 21.i so gegeneinander verschoben, dass sie in einem Werkzeug 100, respektive in einem Schneidkopf 22 zusammengefasst werden können. Der Schnittpunkt der beiden Geraden, die jeweils den Verlauf der Außenschneide 21.a und der Innenschneide 21.i in Fig. 2B definieren, liegt ausserhalb des Materials des Schneidkopfs 22. Somit hat der Schneidkopf 22 eine positive Spitzenweite sₐ₀, wie in Fig. 2B gezeigt ist. In Fig. 2B ist auch die Lage der Teilebene TE1 gezeigt. Anhand der Schnittpunkte der Teilebene TE1 mit der Außenschneide 21.a und mit der Innenschneide 21.i können die bereits erwähnten Flugbahnen des Werkzeugs 100, 200 über deren Radien rᵢ und rₐ definiert werden.

Die Innen- und Außenschneiden 21.i und 21.a werden also gemäß Erfindung so weit auseinandergezogen, bis ein praktisch realisierbarer Schneidkopf 22 mit einer Spitzenweite sₐ₀ entsteht, die positiv ist. Es ist jedoch auf den ersten Blick ein Nachteil einer solchen Konstellation der beiden Schneiden 21.i und 21.a an einem gemeinsamen Schneidkopf 22, dass die Differenz der beiden Radien rᵢ und rₐ eine Längsballigkeit der Zahnflanken am Plankupplungswerkstück 10 erzeugt. Es hat sich jedoch gezeigt, dass diese Längsballigkeit ganz oder weitestgehend reduziert werden kann, indem beim Vorgeben der Maschineneinstellung ein jeweils geeigneter Neigungswinkel τ (Tilt genannt) des Werkzeugs 100, 200 gegenüber dem Plankupplungswerkstück 10 eingestellt wird.

Durch das Vorgeben einer geeigneten Maschineneinstellung mit τ ≠ 0, kann die Längsballigkeit der Zähne der Plankupplungswerkstücke 10 der Erfindung im Wesentlichen frei gewählt werden. Hier ist anzumerken, dass die beiden Plankupplungselemente, die miteinander gepaart werden, nicht miteinander abwälzen, sondern sie werden fest miteinander gepaart. Daraus ergibt sich, dass die Längsballigkeit der Zähne nicht so kritisch ist wie z.B. bei Kegelradpaaren.

Anders ausgedrückt, muss bei Plankupplungswerkstücken 10 die Längsballigkeit der Zähne nicht zwingend am (rechnerisch ermittelten) idealen Punkt liegen. Aus dieser Feststellung ergibt sich nun eine besonders vorteilhafte Umsetzung der Erfindung, die den Werkzeugaufwand weiter reduziert, indem standardisierte Werkzeugs 100, 200 bereit gestellt werden.

Ein standardisiertes Werkzeug ist im Zusammenhang mit der vorliegenden Erfindung ein Werkzeug, das so ausgelegt wurde, dass es zum fräsenden oder schleifenden Bearbeiten von mehr als nur einem Typ von Plankupplungswerkstück 10 einsetzbar ist.

Ein standardisiertes Werkzeug 100, 200 ist im Zusammenhang mit der vorliegenden Erfindung z.B. ein Werkzeug 100, 200, das mit nur zwei verschiedenen Eingriffswinkelstufen (z.B. 21° und 19°) angeboten wird. Oder ein standardisiertes Werkzeug 100, 200 erzeugt jeweils Plankupplungswerkstücke 10, deren Zahnhöhen identisch sind. Ein standardisiertes Werkzeug 100, 200 kann aber auch z.B. in Bezug auf die positive Spitzenweite sₐ₀ oder die positive Profilweite sₐ₀ in verschiedenen Stufen angeboten werden.

Mit anderen Worten ausgedrückt, kann ein standardisiertes Werkzeug 100 oder 200 im Rahmen der Erfindung dazu eingesetzt werden, um mehrere ähnliche Plankupplungen 10 zu bearbeiten, die sich jedoch geringfügig voneinander unterscheiden.

So können sich die Plankupplungen 10 z.B. dadurch ähneln, dass sie eine Lückenweite im Zahngrund 14 haben, die aufgrund der positiven Spitzenweite sₐ₀ oder der positiven Profilweite sₐ₀ identisch ist.

So können sich die Plankupplungen 10 z.B. dadurch ähneln, dass sie ein Modul haben, der ähnlich ist. Ein erstes standardisiertes Werkzeug 100 oder 200 kann z.B. zum Fertigen von Plankupplungswerkstücken 10 eingesetzt werden, die ein Modul = 3,5 haben. Dasselbe standardisierte Werkzeug 100 kann auch eingesetzt werden, um ähnliche Plankupplungswerkstücke 10 zu fertigen, die ein Modul = 4,5 haben. Das standardisierte Werkzeug 100 oder 200 kann daher z.B. für das Fertigen von Plankupplungswerkstücken 10 eingesetzt werden, die ein Modul im Bereich zwischen 3,5 und 4,5 haben. Ein weiteres standardisiertes Werkzeug 100 oder 200 kann z.B. für das Fertigen von Plankupplungswerkstücken 10 eingesetzt werden, die ein Modul im Bereich zwischen 4,6 und 6 haben. D.h. man kann mit jedem dieser Standardwerkzeugs 100, 200 einen bestimmten Modulbereich abdecken.

Vorzugsweise können bei allen Ausführungsformen der Erfindung solche standardisierten Werkzeuge als Verzahnwerkzeug 100 oder als Schleifwerkzeug 200 zum Einsatz kommen, um mehrere ähnliche Plankupplungswerkstücke 10 zu fertigen.

Es geht bei der vorliegenden Erfindung, wie bereits erwähnt, um ein Semi-Completing Einzelteilverfahren. Die beiden gegenüberliegenden Flanken 13.2, 13.1 einer Zahnlücke 12 des zu bearbeitenden Plankupplungswerkstücks 10 werden mit dem gleichen Werkzeug 100 aber mit unterschiedlichen Maschineneinstellungen fertig bearbeitet. Diese Bearbeitung kann jeweils zeitlich direkt hintereinander erfolgen, oder die einzelnen Bearbeitungsschritte können z.B. durch mehrere Austauchbewegungen, Teilungsdrehungen und Zustellbewegungen (Tauchbewegungen) zeitlich voneinander getrennt sein.

Anhand der Figuren 6A bis 6F wird das Beispiel eines lückenübergreifenden Bearbeitungsverfahrens der Erfindung beschrieben. In diesen Figuren ist in schematischer Form jeweils nur ein kleiner Ausschnitt eines Plankupplungswerkstücks 10 in verschiedenen Bearbeitungsphasen gezeigt.

Fig. 6A zeigt eine Ansicht der Teilebene TE1 eines Plankupplungswerkstücks 10 vor dem Durchführen des erfindungsgemäßen Verfahrens. Der Sollverlauf der Zahnflanken ist in der Teilebene TE1 durch gestrichelte Kurven dargestellt. Das Bezugszeichen 13.2 bezeichnet hier den Sollverlauf einer konkaven Zahnflanke und das Bezugszeichen 13.1 bezeichnet den Sollverlauf einer konvexen Zahnflanke. Die Zahnlücke 12 liegt zwischen diesen beiden Flanken 13.2, 13.1. Das Bezugszeichen 11 bezeichnet hier einen benachbarten Zahn.

Fig. 6B zeigt das Plankupplungswerkstück 10 der Fig. 6A, nachdem eine erste konvexe Zahnflanke 13.1 einer ersten Zahnlücke 12 fertig bearbeitet wurde. Die fertig bearbeiteten Zahnflanken sind als durchgezogene Kurven gezeigt. Während eine Innenschneide 21.i des Werkzeugs 100 die erste konvexe Zahnflanke 13.1 fertig bearbeitet, wird durch die Aussenschneide 21.a. desselben Zahnkopfs 22 die erste konkave Zahnflanke 13.2 vorbearbeitet. Die vorbearbeiteten Zahnflanken sind als gepunktete Kurven 13.3 gezeigt. Anhand der Fig. 6B kann man erkennen, dass der Verlauf der vorbearbeiten ersten konkaven Zahnflanke 13.3 sich nicht mit dem Sollverlauf der konkaven Zahnflanke 13.2 deckt.

Nun folgt eine relative Teilungsbewegung des Plankupplungswerkstücks 10 um die Werkstückrotationsachse R2. Die zuvor verwendete Maschineneinstellung bleibt bestehen.

Fig. 6C zeigt das Plankupplungswerkstück 10 der Fig. 6B, nachdem eine zweite konvexe Zahnflanke 13.1 einer zweiten Zahnlücke 12 fertig bearbeitet und eine zweite konkave Zahnflanke vorbearbeitet wurde.

Fig. 6D zeigt das Plankupplungswerkstück 10 der Fig. 6C, nachdem alle konvexen Zahnflanken 13.1 aller Zahnlücken 12 fertig bearbeitet und alle konkaven Zahnflanken vorbearbeitet wurden. Vor der Bearbeitung einer jeden Zahnlücke 12 erfolgt jeweils eine Teilungsbewegung, während die Maschineneinstellung weiter bestehen bleibt.

Diese Bearbeitungsschritte erfolgten allen mit einer ersten Maschineneinstellung. Nun wird eine zweite Maschineneinstellung vorgegeben, um die vorbearbeiteten konkaven Zahnflanken 13.3 fertig zu bearbeiten.

Fig. 6E zeigt das Plankupplungswerkstück 10 der Fig. 6D, nachdem die erste konkave Zahnflanke 13.2 der ersten Zahnlücke 12 fertig bearbeitet wurde. Die fertig bearbeiteten Zahnflanken sind als durchgezogene Kurven gezeigt.

Auch zwischen diesen Schritten erfolgt jeweils eine Teilungsbewegung des Plankupplungswerkstücks 10 um die Werkstückrotationsachse R2.

Fig. 6F zeigt das Plankupplungswerkstück 10, nachdem alle konkaven Zahnflanken 13.2 aller Zahnlücken 12 fertig bearbeitet wurden. Die Zähne 11 sind hier mit einem Muster versehen, um sie optisch deutlicher hervor zu heben.

Anhand der Figuren 7A bis 7F wird das Beispiel eines lückenbasierten Bearbeitungsverfahrens der Erfindung beschrieben. Die Zähne 11 sind in den Figuren 7E und 7F mit einem Muster versehen, um sie optisch deutlicher hervor zu heben.

Fig. 7A zeigt eine Ansicht der Teilebene TE1 eines Plankupplungswerkstücks 10 vor dem Durchführen des erfindungsgemäßen Verfahrens. Die Fig. 7A entspricht der Fig. 6A auf deren Beschreibung hier verwiesen wird.

Die Fig. 7B entspricht der Fig. 6B auf deren Beschreibung hier verwiesen wird.

Fig. 7C zeigt das Plankupplungswerkstück 10 der Fig. 7B, nachdem die erste konkave Zahnflanke 13.2 der ersten Zahnlücke 12 fertig bearbeitet wurde. Um dies zu ermöglichen, wurde eine Umstellung von der ersten auf die zweite Maschineneinstellung vorgenommen, bevor ein Schneidkopf 22 erneut durch die erste Zahnlücke 12 geführt wurde. Eine Teilungsbewegung erfolgt nicht.

Um nun die nächste Zahnlücke 12 bearbeiten zu können, wird eine Umstellung von der zweiten auf die erste Maschineneinstellung vorgenommen und es wird eine Teilungsbewegung ausgeführt.

Fig. 7D zeigt das Plankupplungswerkstück 10 der Fig. 7C, nachdem eine zweite konvexe Zahnflanke 13.1 der zweiten Zahnlücke 12 fertig bearbeitet wurde. Bei diesem Durchgang wurde die zweite konkave Zahnflanke 13.2 der zweiten Zahnlücke 12 vorbearbeitet (mit 13.3 bezeichnet).

Um nun die zweite Zahnlücke 12 fertig bearbeiten zu können, wird erneut eine Umstellung von der ersten auf die zweite Maschineneinstellung vorgenommen. Fig. 7E zeigt das Plankupplungswerkstück 10 der Fig. 7D, nachdem auch die zweiten Zahnlücke 12 fertig bearbeitet wurde.

Die Fig. 7F entspricht der Fig. 6F auf deren Beschreibung hier verwiesen wird.

Um den Zeitaufwand zu reduzieren, der für das jeweilige Verstellen der Maschineneinstellung und/oder das Durchführen der Teilungsbewegung erforderlich ist/sind, können auch andere (alternierende) Verfahrensabläufe angewendet werden. Die gezeigten Verfahren sind jeweils nur als Beispiele zu verstehen. Anstatt mit der Fertigbearbeitung einer konvexen Zahnflanke 13.1 zu beginnen, kann man bei allen Ausführungsformen auch mit der Fertigbearbeitung einer konkaven Zahnflanke 13.2 beginnen.

In den Figuren 1A bis 1E ist die erste Maschineneinstellung unter anderem z.B. durch das Rotationszentrum Mᵢ und den Radius rᵢ definiert. Mit dieser ersten Maschineneinstellung werden die konvexen Flanken 13.1 fertig bearbeitet und gleichzeitigen die konkaven Zahnflanken 13.2 vorbearbeitet. Bei der ersten Maschineneinstellung folgen die Innenschneiden 21.i einer elliptischen Flugbahn mit Radius rᵢ um das Rotationszentrum Mᵢ und die Aussenschneiden 21.a folgen einer anderen elliptischen Flugbahn um dasselbe Rotationszentrum Mᵢ.

Diese beiden elliptischen Flugbahnen spannen eine gemeinsame Ebene auf, die nicht parallel zur Teilebene TE1 des Plankupplungswerkstücks 10 liegt, da der Neigungswinkel τ ≠ 0 ist und da der Maschinengrundwinkel κ ≥ 0 ist. Diese gemeinsame Ebene ist so schräg gestellt, wie durch den Neigungswinkel τ und optional auch durch den Maschinengrundwinkel κ definiert, dass die Schneidspitzen 23 der Schneidköpfe 22 nicht im Bereich A der Fig. 1B mit dem Material des Plankupplungswerkstücks 10 kollidieren.

Das Verfahren der Erfindung kann z.B. auf einer Kegelrad-Verzahnmaschine ausgeführt werden, wobei das Plankupplungswerkstück 10 an der Werkstückspindel und das Werkzeug 100 oder 200 an der Werkzeugspindel der Kegelrad-Verzahnmaschine befestigt werden. Es gibt zahlreiche verschiedene Verzahnmaschinen (z.B. 5-Achs- und 6-Achs-Verzahnungsmaschinen), in denen das Verfahren der Erfindung durchgeführt werden kann.

Typische Grössen, die in diesem Umfeld eine spezifische Maschineneinstellung definieren, sind
- die Lage des Rotationszentrums M, Mᵢ, Mₐ relativ zur Lage des Plankupplungswerkstücks 10 (unter anderem definiert durch den Achsversatz),
- die Radiale,
- der Swivelwinkel,
- der Neigungswinkel τ,
- der Maschinengrundwinkel κ,
- die Drehposition der Werkzeugrotationsachse R1,
- der Wälzwiegenwinkel,
- die Tiefenposition des Werkzeugs 100 oder 200 relativ zu dem Plankupplungswerkstück 10.

Als erste und zweite Relativeinstellungen werden Einstellungen des Werkzeugs 100, 200 relativ zum Plankupplungswerkstück/Plankupplungselement 10 bezeichnet. Diese Begriffe sollen nicht einschränkend zu verstehen sein. Falls z.B. das Werkzeug 100, 200 in mehreren Schritten auf die volle Lückentiefe in das Material des Plankupplungswerkstücks/Plankupplungselements 10 eingetaucht wird, so führt diese Tauchbewegung zu einer zusätzlichen Änderung der Relativeinstellung.

Beim Übergang von der ersten zu der zweiten Maschineneinstellung, wird mindestens eine der genannten typischen Grössen (insbesondere der Neigungswinkel τ) verändert.

Das bisher Geschriebene kann auch auf Vollwerkzeuge mit festen Messern und nicht nur auf Stabmesserköpfe angewendet werden. Es kann auch, wie erwähnt, auf Schleifwerkzeuge 200 angewendet werden, die eine Topfform haben.

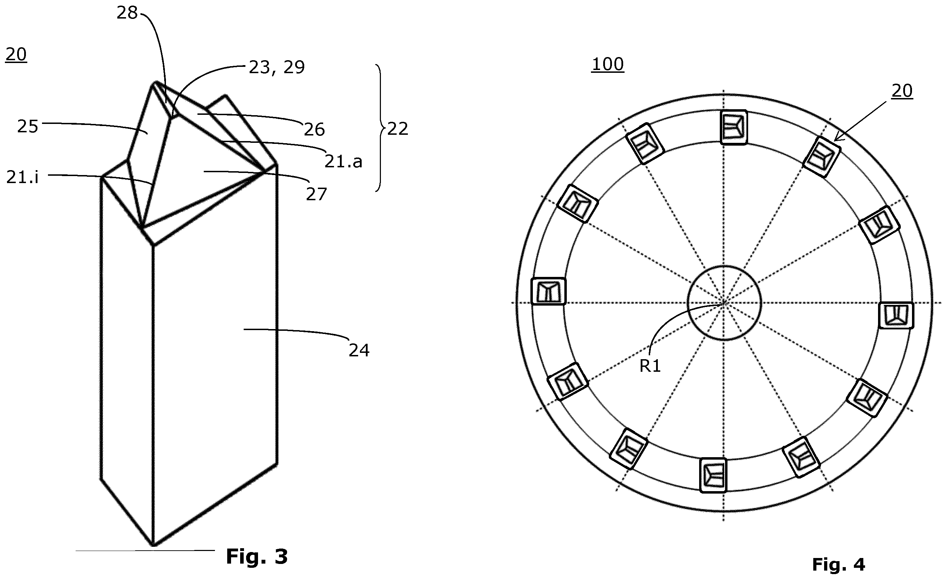

Gemäss Erfindung kommt vorzugsweise bei allen Ausführungsformen ein Stirnmesserkopf als Messerkopf-Verzahnwerkzeug 100 zum Einsatz. Der Stirnmesserkopf ist mit mehreren Stabmessern 20 bestückt, die stirnseitig aus dem Verzahnwerkzeug 100 herausragen. Ein Stabmesser 20 hat bei allen Ausführungsformen vorzugsweise eine Form, wie in Fig. 3 beispielhaft gezeigt. Das Stabmesser 20 weist einen Schaft 24 auf. Die Form des Schafts 24 ist so gewählt, dass das Stabmesser 20 sicher und genau in einer entsprechenden Messernut oder -kammer des Messerkopf-Verzahnwerkzeugs 100 befestigt werden kann. Der Querschnitt des Schafts 24 kann zum Beispiel rechteckig oder polygonal sein.

Im Kopfbereich (hier als Schneidkopf 22 bezeichnet) des Stabmessers 20, befinden sich beispielweise eine erste Freifläche 25, eine zweite Freifläche 26, eine (gemeinsame) Spanfläche 27, eine Kopffreifläche 28, eine Innenschneide 21.i, eine Aussenschneide 21.a und eine Kopfschneide 29. Der vorderste Bereich des Schneidkopfs 22 wird auch als Schneidspitze 23 bezeichnet.

Die Spanfläche 27 schneidet sich mit der ersten Freifläche 25 in einer virtuellen Schnittlinie, die in etwa dem Verlauf der Innenschneide 21.i entspricht, oder die genau mit dem Verlauf der Innenschneide 21.i übereinstimmt. Die Spanfläche 27 schneidet sich mit der zweiten Freifläche 26 in einer virtuellen Schnittlinie, die dem Verlauf der Aussenschneide 21.a entspricht, oder die genau mit dem Verlauf der Aussenschneide 21.a übereinstimmt.

Die Spanfläche 27 muss jedoch keine ebene Fläche sein, wie in Fig. 3 anhand einer vereinfachten Darstellung gezeigt.

Die positive Spitzenweite sₐ₀ ist bei allen Ausführungsformen so gewählt, dass in der ersten Maschineneinstellung die Aussenschneide 21.a beim Verlassen der Zahnlücke 12 nicht in die konkave Flanke 13.2 schneidet. Es sollte hier bei der Vorbearbeitung stets ein kleines Aufmaß an Material stehen bleiben, das dann in der zweiten Maschineneinstellung bei der Fertigbearbeitung der konkaven Flanke 13.2 abgetragen wird.

Fig. 4 zeigt eine Draufsicht eines beispielhaften Stabmesserkopfs, der hier als Verzahnungswerkzeug 100 dient. Der gezeigt Stabmesserkopf ist hier stirnseitig mit 12 Stabmessern 20 bestückt, die allesamt in einem gleichmäßigen Winkelabstand entlang des Umfangs des Stabmesserkopfs angeordnet sind. Wie man Fig. 4 entnehmen kann, stehen die Spanfläche 27 der einzelnen Stabmesser 20 parallel zu Radialschnittebenen des Verzahnungswerkzeugs 100.

Analog ist bei einer Topfschleifscheibe 200, die in Fig. 5 anhand eines schematischen Beispiels gezeigt ist, die positive Profilweite sₐ₀ so gewählt, dass die Aussenschleiffläche 221.a der Topfschleifscheibe 200 beim Verlassen der Zahnlücke 12 ein geringes Materialaufmass an der konkaven Flanke 13.2 stehen lässt. Dieses geringe Materialaufmass wird dann in der zweiten Maschineneinstellung bei der Fertigbearbeitung der konkaven Flanke 13.2 durch Schleifen abgetragen.

**Bezugszeichen:**

| | |
|---|---|
| Plankupplungswerkstück/Plankupplungselement | 10 |
| Zähne | 11 |
| Zahnlücken | 12 |
| Konvexe Flanke | 13.1 |
| epizykloide Flugbahn der Innenschneide | 13.1* |
| Konkave Flanke | 13.2 |
| epizykloide Flugbahn der Außenschneide | 13.2* |
| Konkave Flanke | 13.3 |
| Zahngrund | 14 |
| Einbaufläche | 15 |
| Mantelfläche | 16 |
| | |
| Auslegungspunkt | 19 |
| (Stab-)Messer | 20 |
| Aussenschneide | 21.a |
| Innenschneide | 21.i |
| Schneid kopf | 22 |
| Theoretischer Schneidkopf | 22.T |
| Schneidspitze | 23 |
| Stab/Schaft | 24 |
| erste Freifläche | 25 |
| zweite Freifläche | 26 |
| Spanfläche | 27 |
| Kopffreifläche | 28 |
| Kopfschneide | 29 |
| | |
| (Messerkopf-)Verzahnwerkzeug | 100 |
| | |
| Schleifwerkzeug | 200 |
| Aussenschleiffläche | 221.a |
| Innenschleiffläche | 221.i |
| | |
| Bereich | A |
| Schritte | A1 - A4 |
| Profilwinkel | α |
| Flugbahn | B |
| Bildausschnitt | C |
| Teilkegelwinkel | δ |
| Kopfkegel | δₐ |
| Fußkegelwinkel | δ_{f} |
| Maschinengrundwinkel | κ |
| Kreisbogen | KB |
| Schritte | K1 - K4 |
| Schritte | L1 - I6 |
| Rotationszentrum | Mi, Ma |
| Effektiver Radius der Flugbahn der Aussenschneide | r(cv) |
| Effektiver Radius der Flugbahn der Innenschneide | r(cx) |
| Werkzeug rotationsachse | R1 |
| Werkstückrotationsachse | R2 |
| Radien der Flugkreise | rᵢ, rₐ |
| Spitzenweite / Profilweite | Sₐ₀ |
| Teilebene des Werkstücks | TE1 |
| Teilebene des Werkzeugs | TE2 |
| Neigungswinkel (Tilt) | τ |
| Werkzeugneigung (Tilt) beim Bearbeiten der konvexen Flanken | τₓ |
| Werkzeugneigung (Tilt) beim Bearbeiten der konkaven Flanken | τᵥ |
| Drehwinkel des Plankupplungswerkstücks für eine (Zahn)teilung | Δω₁ |
| Werkzeugdrehbewegung | ω₂ |

## Patentansprüche

1. Verfahren zur Bearbeitung der Zahnflanken eines Plankupplungswerkstücks (10), bei dem es sich um ein Semi-Completing Einzelteilverfahren handelt, bei dem ein Werkzeug (100, 200) zum Einsatz kommt, bei dem es sich entweder um ein Verzahnwerkzeug (100) handelt, das mindestens einen Schneidkopf (22) mit zwei Schneiden (21.a, 21.i) umfasst, die so an dem mindestens einen Schneidkopf (22) angeordnet sind, dass sie eine positive Spitzenweite (sₐ₀) definieren, oder bei dem es sich um ein Schleifwerkzeug (200) in Form einer Topfschleifscheibe mit zwei Schleiffläche (221.a, 221.i) handelt, die eine positive Profilweite (sₐ₀) definieren, wobei das Verfahren den folgenden Schritt umfasst:
A1. Ausführen mindestens einer ersten relativen Einstellbewegung, um eine erste Relativeinstellung zu erreichen, wobei als Teil der ersten relativen Einstellbewegung das Ausführen einer Austauchbewegung und einer Eintauchbewegung vorgenommen wird,
**dadurch gekennzeichnet, dass** das Verfahren auch die folgenden Schritte umfasst:
A2. Fertigbearbeiten einer ersten Zahnflanke (13.2; 13.1) einer Zahnlücke (12) des Plankupplungswerkstücks (10) mit mindestens einer ersten Schneide der beiden Schneiden (21.a; 21.i) oder mit einer ersten Schleiffläche der beiden Schleifflächen (221.a; 221.i) des Werkzeugs (100, 200) und gleichzeitiges Vorbearbeiten einer zweiten Zahnflanke (13.1; 13.2) derselben Zahnlücke (12) mit der zweiten Schneide der beiden Schneiden (21.a; 21.i) oder mit der zweiten Schleiffläche der beiden Schleifflächen (221.a; 221.i) in der ersten Relativeinstellung,
A3. Ausführen mindestens einer zweiten relativen Einstellbewegung, um eine zweite Relativeinstellung zu erreichen, wobei als Teil der zweiten relativen Einstellbewegung das Ausführen einer Austauchbewegung und einer Eintauchbewegung vorgenommen wird,
A4. Fertigbearbeiten der zweiten Zahnflanke (13.2; 13.1) derselben oder einer weiteren Zahnlücke (12) mit mindestens einer zweiten Schneide der beiden Schneiden (21.a; 21.i) oder mit der zweiten Schleiffläche der beiden Schleifflächen (221.a; 221.i) des Werkzeugs (100, 200).

2. Verfahren nach Anspruch 1, **dadurch gekennzeichnet, dass** im Schritt A2.
∘ in der ersten Relativeinstellung alle ersten Schneiden oder die erste Schleiffläche entlang einer ersten Flugbahn und alle zweiten Schneiden oder die zweite Schleiffläche entlang einer zweiten Flugbahn bewegt werden, und
∘ die erste Flugbahn zusammen mit der zweiten Flugbahn eine gemeinsame Ebene aufspannt.

3. Verfahren nach Anspruch 1 oder 2, **dadurch gekennzeichnet, dass** im Schritt A4.
∘ in der zweiten Relativeinstellung alle zweiten Schneiden oder die zweite Schleiffläche entlang einer dritten Flugbahn bewegt werden,
∘ die dritte Flugbahn einen effektiven Radius hat, der grösser ist als ein effektiver Radius der zweiten Flugbahn, und
∘ die dritte Flugbahn eine Ebene aufspannt, die schräg liegt zu der gemeinsamen Ebene.

4. Verfahren nach Anspruch 1, 2 oder 3, **dadurch gekennzeichnet, dass** im Schritt A1. als Teil der ersten relativen Einstellbewegung
- die Einstellung einer ersten Maschineneinstellung und/oder
- das Ausführen einer Teilungsbewegung
vorgenommen wird.

5. Verfahren nach einem der Ansprüche 1 bis 4, **dadurch gekennzeichnet, dass** im Schritt A2. als Teil der zweiten relativen Einstellbewegung
- die Einstellung einer zweiten Maschineneinstellung und/oder
- das Ausführen einer Teilungsbewegung
vorgenommen wird.

6. Verfahren nach Anspruch 1, 2 oder 3, **dadurch gekennzeichnet, dass** bei der ersten und der zweiten Relativeinstellung das Werkzeug (100, 200) gegenüber dem Plankupplungswerkstück (10) so geneigt ist, dass es entlang einer schrägen Bahn (B) durch die momentan zu bearbeitende Zahnlücke (12) des Plankupplungswerkstücks (10) geführt wird, wobei diese schräge Bahn (B) in einem Axialschnitt durch das Plankupplungswerkstück (10) im Wesentlichen parallel zum Verlauf eines Zahngrundes (14) der momentan zu bearbeitenden Zahnlücke (12) liegt.

7. Verfahren nach Anspruch 6, **dadurch gekennzeichnet, dass** der Zahngrund (14) der Zahnlücke (12) mit einem Maschinengrundwinkel (κ) gegenüber einer Teilebene (TE1) des Plankupplungswerkstücks (10) geneigt ist.

8. Verfahren nach einem der Ansprüche 1 bis 6, **dadurch gekennzeichnet, dass** es sich um ein lückenbasiertes Semi-Completing Einzelteilverfahren handelt, bei dem mit der ersten Relativeinstellung die erste Zahnflanke (13.2; 13.1) einer ersten Zahnlücke (12) und mit der zweiten Relativeinstellung die zweite Zahnflanke (13.2; 13.1) der ersten Zahnlücke (12) fertig bearbeitet werden, bevor in einem Zwischenschritt eine Austauchbewegung, Teilungsdrehung und Eintauchbewegung ausgeführt werden, um dann in nachfolgenden Schritten mit der ersten Relativeinstellung die erste Zahnflanke (13.2; 13.1) einer weiteren Zahnlücke (12) und mit der zweiten Relativeinstellung die zweite Zahnflanke (13.2; 13.1) der weiteren Zahnlücke (12) fertig zu bearbeiten.

9. Verfahren nach einem der Ansprüche 1 bis 6, **dadurch gekennzeichnet, dass** es sich um ein lückenübergreifendes Semi-Completing Einzelteilverfahren handelt, bei dem mit der ersten Relativeinstellung die erste Zahnflanke (13.2; 13.1) einer ersten Zahnlücke (12) fertig bearbeitet wird, bevor in einem Zwischenschritt eine Austauchbewegung, Teilungsdrehung und Eintauchbewegung ausgeführt werden, um dann in einem nachfolgenden Schritt wiederum mit der ersten Relativeinstellung die erste Zahnflanke (13.2; 13.1) einer weiteren Zahnlücke (12) fertig zu bearbeiten, wobei das Einstellen der zweiten Relativeinstellung und das Fertigbearbeiten der zweiten Zahnflanken (13.2; 13.1) erst dann erfolgt, nachdem mindestens zwei erste Zahnflanken (13.2; 13.1) von zwei unterschiedlichen Zahnlücken (12) fertig bearbeitet wurden.

10. Verfahren nach einem der Ansprüche 1 bis 6, **dadurch gekennzeichnet, dass** sich die zweite Maschineneinstellung von der ersten Maschineneinstellung durch einen oder mehrere der folgenden Grössen unterscheidet:
- Lage des Rotationszentrums (M, Mi, Ma) des Werkzeugs (100) relativ zur Lage des Plankupplungswerkstücks (10), und/oder
- Einstellung der Radiale einer Maschine, in der das Verfahren ausgeführt wird, und/oder
- Einstellung des Wiegenwinkels einer Maschine, in der das Verfahren ausgeführt wird, und/oder
- Einstellung des Neigungswinkels (τ) einer Maschine, in der das Verfahren ausgeführt wird.

11. Verfahren nach einem der Ansprüche 1 bis 6, **dadurch gekennzeichnet, dass** es sich bei dem Werkzeug (100) um ein Messerkopf-Verzahnwerkzeug (100) oder um ein Vollwerkzeug handelt, das mit mehreren Messern (20) bestückt ist oder das mehrere Messer aufweist, wobei jedes Messer (20) einen Schneidkopf (22) mit einer Innenschneide (21.i) als erste Schneide und einer Aussenschneide (21.a) als zweite Schneide aufweist, die so an dem Schneidkopf (22) angeordnet sind, dass sie die positive Spitzenweite (sₐ₀) definieren.

12. Verfahren nach Anspruch 11, **dadurch gekennzeichnet, dass** es sich bei der ersten Zahnflanke um eine konvexe Zahnflanke (13.1) und bei der zweiten Zahnflanke um eine konkave Zahnflanke (13.2) handelt, und wobei
- das Fertigbearbeiten der konvexen Zahnflanke (13.1) mit einer Innenschneide (21.i) des Verzahnwerkzeugs (100) und das gleichzeitige Vorbearbeiten der konkaven Zahnflanke (13.2) derselben Zahnlücke (12) mit einer Aussenschneide (21.a) des Verzahnwerkzeugs (100) in der ersten Maschineneinstellung erfolgt, und wobei
- sich die Innenschneide (21.i) und die Aussenschneide (21.a) an demselben Schneidkopf (22) befinden.

13. Verfahren nach einem der Ansprüche 1 bis 6, **dadurch gekennzeichnet, dass** es sich bei dem Werkzeug (100) um ein Messerkopf-Verzahnwerkzeug (100) oder um ein Vollwerkzeug handelt, das mit mehreren Messern (20) bestückt ist oder das mehrere Messer aufweist, wobei jedes Messer (20) einen Schneidkopf (22) mit einer Aussenschneide (21.a) als erste Schneide und einer Innenschneide (21.i) als zweite Schneide aufweist, die so an dem Schneidkopf (22) angeordnet sind, dass sie die positive Spitzenweite (sₐ₀) definieren.

14. Verfahren nach Anspruch 13, **dadurch gekennzeichnet, dass** es sich bei der ersten Zahnflanke um eine konkave Zahnflanke (13.2) und bei der zweiten Zahnflanke (13.1 um eine konvexe Zahnflanke (13.2) handelt, und wobei
- das Fertigbearbeiten der konkaven Zahnflanke (13.2) mit einer Aussenschneide (21.a) des Verzahnwerkzeugs (100) und das gleichzeitige Vorbearbeiten der konvexen Zahnflanke (13.1) derselben Zahnlücke (12) mit einer Innenschneide (21.i) des Verzahnwerkzeugs (100) in der ersten Relativeinstellung erfolgt, und wobei
- sich die Innenschneide (21.i) und die Aussenschneide (21.a) an demselben Schneidkopf (22) befinden.

15. Verfahren nach Anspruch 11 oder 13, **dadurch gekennzeichnet, dass** alle Schneidköpfe (22) der Messer (20) des Verzahnwerkzeugs (100) auf einem gemeinsamen Kreis des Verzahnwerkzeugs (100) liegen, der konzentrisch zu einem Rotationszentrum (M) des Verzahnwerkzeugs (100) angeordnet ist.

16. Verfahren nach einem der Ansprüche 1 bis 15, **dadurch gekennzeichnet, dass** nach dem Fertigbearbeiten aller Zahnflanken ein Schleifverfahren zur Hartfeinbearbeitung aller Zahnflanken zum Einsatz kommt.

17. Verfahren nach einem der Ansprüche 1 bis 7, **dadurch gekennzeichnet, dass** es sich bei dem Werkzeug (100) um ein Schleifwerkzeug (200) in Form einer Topfschleifscheibe handelt, wobei eine Innenschleiffläche (221.i) als erste Schleiffläche und eine Aussenschleiffläche (221.a) als zweite Schleiffläche dienen.

18. Verfahren nach einem der Ansprüche 1 bis 7, **dadurch gekennzeichnet, dass** es sich bei dem Werkzeug (100) um ein Schleifwerkzeug (200) in Form einer Topfschleifscheibe handelt, wobei eine Innenschleiffläche (221.i) als zweite Schleiffläche und eine Aussenschleiffläche (221.a) als erste Schleiffläche dienen.

19. Verfahren nach einem der Ansprüche 1 bis 16, **dadurch gekennzeichnet, dass** Zähne (11) des Plankupplungswerkstücks (10) im Rahmen des Semi-Completing Einzelteilverfahrens eine Balligkeit erhalten, die durch ein Neigen des Werkzeugs (100, 200) beeinflusst wird.

20. Verfahren nach einem der Ansprüche 1 bis 16, **dadurch gekennzeichnet, dass** Spiralwinkelfehler des Plankupplungswerkstücks (10) durch ein Ändern der ersten und/oder zweiten Relativeinstellung ausgleichbar sind.

## Claims

1. A method for machining the tooth flanks of a face coupling workpiece (10),
wherein the method is a semi-completing single indexing method, in which a tool (100, 200) is used, in which it is either a gear cutting tool (100), which comprises at least one cutter head (22) having two cutting edges (21.a, 21.i), which are arranged on the at least one cutting head (22) so that they define a positive tip width (sₐ₀) or in which it is a grinding tool (200) in the form of a cup grinding wheel having two grinding surfaces (221.a, 221.i), which define a positive profile width (sₐ₀), wherein the method comprises the following step:
A1. executing at least one first relative setting movement, to achieve a first relative setting, wherein as part of the first relative setting movement the execution an exiting movement and a plunging movement is preformed,
**characterized in that** the method also comprises the following steps:
A2. finish machining of a first tooth flank (13.2; 13.1) of a tooth gap (12) of the face coupling workpiece (10) using at least one first cutting edge of the two cutting edges (21.a; 21.i) or using a first grinding surface of the two grinding surfaces (221.a; 221.i) of the tool (100, 200) and simultaneously premachining a second tooth flank (13.1; 13.2) of the same tooth gap (12) using the second cutting edge of the two cutting edges (21.a; 21.i) or using the second grinding surface of the two grinding surfaces (221.a; 221.i) in the first relative setting,
A3. executing at least one second relative setting movement, to achieve a second relative setting, wherein as part of the second relative setting movement the execution an exiting movement and a plunging movement is preformed,
A4. finish machining of the second tooth flank (13.2; 13.1) of the same or a further tooth gap (12) using at least one second cutting edge of the two cutting edges (21.a; 21.i) or using the second grinding surface of the two grinding surfaces (221.a; 221.i) of the tool (100, 200).

2. The method according to claim 1, **characterized in that** in step A2,
∘ in the first relative setting, all first cutting edges or the first grinding surface are moved along a first flight path and all second cutting edges or the second grinding surface are moved along a second flight path, and
∘ the first flight path spans a common plane together with the second flight path.

3. The method according to claim 1 or 2, **characterized in that** in step A4,
∘ in the second relative setting, all second cutting edges or the second grinding surface are moved along a third flight path,
∘ the third flight path has an effective radius which is larger than an effective radius of the second flight path, and
∘ the third flight path spans a plane which is inclined in relation to the common plane.

4. The method according to claim 1, 2, or 3, **characterized in that** in step A1, as part of the first relative setting movement,
- the setting of a first machine setting and/or
- the execution of an indexing movement
is performed.

5. The method according to any one of claims 1 to 4, **characterized in that** in step A2, as part of the second relative setting movement,
- the setting of a second machine setting and/or
- the execution of an indexing movement
is performed.

6. The method according to claim 1, 2, or 3, **characterized in that**, in the first and the second relative setting, the tool (100, 200) is inclined in relation to the face coupling workpiece (10) so that it is guided along an inclined path (B) through the tooth gap (12) presently to be machined of the face coupling workpiece (10), wherein this inclined path (B), in an axial section through the face coupling workpiece (10), is essentially parallel to the profile of a tooth base (14) of the tooth gap (12) presently to be machined.

7. The method according to claim 6, **characterized in that** the tooth base (14) of the tooth gap (12) is inclined at a machine base angle (κ) in relation to an index plane (TE1) of the face coupling workpiece (10).

8. The method according to any one of claims 1 to 6, **characterized in that** it is a gap-based semi-completing single indexing method, in which the first tooth flank (13.2; 13.1) of a first tooth gap (12) is finish machined using the first relative setting and the second tooth flank (13.2; 13.1) of the first tooth gap (12) is finish machined using the second relative setting, before an exiting movement, indexing rotation, and broaching movement are executed in an intermediate step, to then finish machine the first tooth flank (13.2; 13.1) of a further tooth gap (12) using the first relative setting and the second tooth flank (13.2; 13.1) of the further tooth gap (12) using the second relative setting in following steps.

9. The method according to any one of claims 1 to 6, **characterized in that** it is a gap-encompassing semi-completing single indexing method, in which the first tooth flank (13.2; 13.1) of a first tooth gap (12) is finish machined using the first relative setting, before an exiting movement, indexing rotation, and broaching movement are executed in an intermediate step, to then finish machine the first tooth flank (13.2; 13.1) of a further tooth gap (12) again using the first relative setting in a following step, wherein the setting of the second relative setting and the finish machining of the second tooth flanks (13.2; 13.1) is first performed after at least two first tooth flanks (13.2; 13.1) of two different tooth gaps (12) have been finish machined.

10. The method according to any one of claims 1 to 6, **characterized in that** the second machine setting differs from the first machine setting by way of one or more of the following variables:
- location of the rotation center (M, Mi, Ma) of the tool (100) in relation to the location of the face coupling workpiece (10), and/or
- setting of the radial of a machine in which the method is executed, and/or
- setting of the sway angle of a machine in which the method is executed, and/or
- setting of the angle of inclination (τ) of a machine in which the method is executed.

11. The method according to any one of claims 1 to 6, **characterized in that** the tool (100) is a cutter head gear cutting tool (100) or a solid tool, which is equipped with multiple blades (20) or which has multiple blades, wherein each blade (20) has a cutting head (22) having an inner cutting edge (21.i) as the first cutting edge and an outer cutting edge (21.a) as the second cutting edge, which are arranged on the cutting head (22) so that they define a positive tip width (sₐ₀).

12. The method according to claim 11, **characterized in that** the first tooth flank is a convex tooth flank (13.1) and the second tooth flank is a concave tooth flank (13.2), and wherein
- the finish machining of the convex tooth flank (13.1) is performed using an inner cutting edge (21.i) of the gear cutting tool (100) and the simultaneous premachining of the concave tooth flank (13.2) of the same tooth gap (12) is performed using an outer cutting edge (21.a) of the gear cutting tool (100) in the first machine setting, and wherein
- the inner cutting edge (21.i) and the outer cutting edge (21.a) are located on the same cutting head (22).

13. The method according to any one of claims 1 to 6, **characterized in that** the tool (100) is a cutter head gear cutting tool (100) or a solid tool, which is equipped with multiple blades (20) or which has multiple blades, wherein each blade (20) has a cutting head (22) having an outer cutting edge (21.a) as the first cutting edge and an inner cutting edge (21.i) as the second cutting edge, which are arranged on the cutting head (13) so that they define a positive tip width (sₐ₀).

14. The method according to claim 13, **characterized in that** the first tooth flank is a concave tooth flank (13.2) and the second tooth flank is a convex tooth flank (13.1), and wherein
- the finish machining of the concave tooth flank (13.2) is performed using an outer cutting edge (21.a) of the gear cutting tool (100) and the simultaneous premachining of the convex tooth flank (13.1) of the same tooth gap (12) is performed using an inner cutting edge (21.i) of the gear cutting tool (100) in the first relative setting, and wherein
- the inner cutting edge (21.i) and the outer cutting edge (21.a) are located on the same cutting head (22).

15. The method according to claim 11 or 13, **characterized in that** all cutting heads (22) of the blades (20) of the gear cutting tool (100) are on a common circle of the gear cutting tool (100), which is arranged concentrically in relation to a rotation center (M) of the gear cutting tool (100).

16. The method according to any one of claims 1 to 15, **characterized in that** after the finish machining of all tooth flanks, a grinding method is used for the hard-fine machining of all tooth flanks.

17. The method according to any one of claims 1 to 7, **characterized in that** the tool (100) is a grinding tool (200) in the form of a cup grinding wheel, wherein an inner grinding surface (221.i) is used as the first grinding surface and an outer grinding surface (221.a) is used as the second grinding surface.

18. The method according to any one of claims 1 to 7, **characterized in that** the tool (100) is a grinding tool (200) in the form of a cup grinding wheel, wherein an inner grinding surface (221.i) is used as the second grinding surface and an outer grinding surface (221.a) is used as the first grinding surface.

19. The method according to any one of claims 1 to 16, **characterized in that** teeth (11) of the face coupling workpiece (10) obtain a crowning in the scope of the semi-completing single indexing method, which is influenced by an inclination of the tool (100, 200).

20. The method according to any one of claims 1 to 16, **characterized in that** spiral angle errors of the face coupling workpiece (10) can be compensated for by changing the first and/or second relative setting.

## Revendications

1. Procédé pour usiner des flancs de dents d'une pièce d'usinage d'accouplement plan, dans lequel il s'agit d'un fraisage de semi-finition, dans lequel on utilise un outil (100, 200), pour lequel il s'agit soit d'un outil à tailler les engrenages (100) comprenant au moins une tête de coupe (22) avec deux tranchants (21.a, 21.i) qui sont agencés au niveau de la au moins une tête de coupe (22) de façon à définir un entre-pointes positif (Sₐₒ), soit d'un outil de rectification (200) sous la forme d'une meule-boisseau avec deux surfaces abrasives (221.a, 221.i) qui définissent une largeur de profil positive (Sₐₒ), le procédé comprenant les étapes suivantes consistant à :
A1. Réaliser au moins un premier mouvement de réglage relatif pour obtenir un premier réglage relatif, dans lequel comme partie du premier mouvement de réglage relatif on procède à un mouvement d'émersion et à un mouvement d'immersion,
**caractérisé en ce que** le procédé comprend également les étapes suivantes consistant à :
A2. usiner un premier flanc de dent (13.2 ; 13.1) d'un entredent (12) de la pièce d'usinage d'accouplement plan (10) avec au moins un premier tranchant des deux tranchants (21.a ; 21.i) ou avec une première surface abrasive des deux surfaces abrasives (221.a ; 221.i) de l'outil (100, 200) et pré-usiner en même temps un deuxième flanc de dent (13.1 ; 13.2) du même entredent (12) avec le deuxième tranchant des deux tranchants (21.a ; 21.i) ou avec la deuxième surface abrasive des deux surfaces abrasives (221.a ; 221.i) dans le premier réglage relatif,
A3. Réaliser au moins un deuxième mouvement de réglage relatif pour obtenir un deuxième réglage relatif, dans lequel comme partie du deuxième mouvement de réglage relatif on procède à un mouvement d'émersion et à un mouvement d'immersion,
A4. Usiner le deuxième flanc de dent (13.2 ; 13.1) du même ou d'un autre entredent (12) avec au moins un deuxième tranchant des deux tranchants (21.a ; 21.i) ou avec la deuxième surface abrasive des deux surfaces abrasives (221.a ; 221.i) de l'outil (100, 200).

2. Procédé selon la revendication 1, **caractérisé en ce qu'**à l'étape A2,
- dans le premier réglage relatif tous les premiers tranchants ou la première surface abrasive sont déplacé(e)s le long d'une première trajectoire et tous les deuxièmes tranchants ou la deuxième surface abrasive sont déplacé(e)s le long d'une deuxième trajectoire, et
- la première trajectoire s'étend avec la deuxième trajectoire sur un plan commun.

3. Procédé selon la revendication 1 ou 2, **caractérisé en ce qu'**à l'étape A4.
- dans le deuxième réglage relatif tous les deuxièmes tranchants ou la deuxième surface abrasive sont déplacé(e)s le long d'une troisième trajectoire,
- la troisième trajectoire a un rayon effectif qui est supérieur à un rayon effectif de la deuxième trajectoire, et
- la troisième trajectoire s'étend sur un plan perpendiculaire au plan commun.

4. Procédé selon la revendication 1, 2 ou 3, **caractérisé en ce qu'**à l'étape A1, comme partie du premier mouvement de réglage relatif
- on procède au réglage d'un premier réglage de machine et/ou
- on réalise un mouvement de division.

5. Procédé selon l'une des revendications 1 à 4, **caractérisé en ce qu'**à l'étape A2, comme partie du deuxième mouvement de réglage relatif
- on procède au réglage d'un deuxième réglage de machine et/ou
- on réalise un mouvement de division.

6. Procédé selon la revendication 1, 2 ou 3, **caractérisé en ce que**, lors du premier et du deuxième réglage relatif, l'outil (100, 200) est incliné par rapport à la pièce d'usinage d'accouplement plan (10), de sorte qu'il est guidé le long d'une trajectoire oblique (B) à travers l'entredent à usiner (12) de la pièce d'usinage d'accouplement plan (10), cette trajectoire oblique (B) étant, dans une coupe axiale à travers la pièce d'usinage d'accouplement plan (10), essentiellement parallèle au tracé d'une base de dent (14) de l'entredent (12) à usiner.

7. Procédé selon la revendication 6, **caractérisé en ce que** la base de dent (14) de l'entredent (12) est inclinée suivant un angle de base de machine (κ) par rapport à un plan partiel (TE1) de la pièce d'usinage d'accouplement plan (10).

8. Procédé selon l'une des revendications 1 à 6, **caractérisé en ce qu'**il s'agit d'un fraisage de semi-finition basé sur les entredents, dans lequel avec le premier réglage relatif on usine le premier flanc de dent (13.2 ; 13.1) d'un premier entredent (12) et avec le deuxième réglage relatif le deuxième flanc de dent (13.2 ; 13.1) du premier entredent (12) avant de réaliser, dans une étape intermédiaire, un mouvement d'émersion, une rotation de division et un mouvement d'immersion pour ensuite, dans les étapes ultérieures, usiner avec le premier réglage relatif le premier flanc de dent (13.2 ; 13.1) d'un autre entredent (12) et avec le deuxième réglage relatif le deuxième flanc de dent (13.2 ; 13.1) de l'autre entredent (12).

9. Procédé selon l'une des revendications 1 à 6, **caractérisé en ce qu'**il s'agit d'un fraisage de semi-finition chevauchant les entredents, dans lequel on usine avec le premier réglage relatif le premier flanc de dent (13.2 ; 13.1) d'un premier entredent (12) avant de réaliser, dans une étape intermédiaire, un mouvement d'émersion, une rotation de division et un mouvement d'immersion, pour ensuite, dans une étape ultérieure, usiner de nouveau avec le premier réglage relatif le premier flanc de dent (13.2 ; 13.1) d'un autre entredent (12), le réglage du deuxième réglage relatif et l'usinage des deuxièmes flancs de dents (13.2 ; 13.1) n'intervenant qu'après usinage d'au moins deux premiers flancs de dents (13.2 ; 13.1) de deux entredents différents (12).

10. Procédé selon l'une des revendications 1 à 6, **caractérisé en ce que** le deuxième réglage de machine se différencie du premier réglage de machine par un ou plusieurs des paramètres suivants :
- position du centre de rotation (M, Mi, Ma) de l'outil (100) par rapport à la position de la pièce d'usinage d'accouplement plan (10), et/ou
- réglage des radiales d'une machine dans laquelle le procédé est réalisé, et/ou
- réglage de l'angle de rotation d'une machine dans laquelle le procédé est réalisé, et/ou
- réglage de l'angle d'inclinaison (τ) d'une machine dans laquelle le procédé est réalisé.

11. Procédé selon l'une des revendications 1 à 6, **caractérisé en ce que** l'outil (100) est un outil à tailler les engrenages à tête de fraisage (100) ou un outil complet équipé de plusieurs lames (20) ou qui présente plusieurs lames, chaque lame (20) présentant une tête de coupe (22) avec un tranchant intérieur (21.i) comme premier tranchant et un tranchant extérieur (21.a) comme deuxième tranchant, lesquels sont agencés sur la tête de coupe (22) de façon à définir un entre-pointes positif (Sₐₒ).

12. Procédé selon la revendication 11, **caractérisé en ce que** le premier flanc de dent est un flanc de dent convexe (13.1) et le deuxième flanc de dent est un flanc de dent concave (13.2), dans lequel
- l'usinage du flanc de dent convexe (13.1) se fait avec un tranchant intérieur (21.i) de l'outil à tailler les engrenages (100) et le pré-usinage simultané du flanc de dent concave (13.2) du même entredent (12) se fait avec un tranchant extérieur (21.a) de l'outil à tailler les engrenages (100) dans le premier réglage de machine, et dans lequel
- le tranchant intérieur (21.i) et le tranchant extérieur (21.a) se trouvent sur la même tête de coupe (22).

13. Procédé selon l'une des revendications 1 à 6, **caractérisé en ce que** l'outil (100) est un outil à tailler les engrenages à tête de fraisage (100) ou un outil complet qui est équipé de plusieurs lames (20) ou qui présente plusieurs lames, chaque lame (20) présentant un tête de coupe (22) avec un tranchant extérieur (21.a) comme premier tranchant et un tranchant intérieur (21.i) comme deuxième tranchant, lesquels sont agencés sur la tête de coupe de façon à définir l'entre-pointes positif (Sₐₒ).

14. Procédé selon la revendication 13, **caractérisé en ce que** le premier flanc de dent est un flanc de dent concave (13.2) et le deuxième flanc de dent est un flanc de dent convexe (13.1), dans lequel
- l'usinage du flanc de dent concave (13.2) se fait avec un tranchant extérieur (21.a) de l'outil à tailler les engrenages (100) et le pré-usinage simultané du flanc de dent convexe (13.1) du même entredent (12) se fait avec un tranchant intérieur (21.i) de l'outil à tailler les engrenages (100) dans le premier réglage relatif, et dans lequel
- le tranchant intérieur (21.i) et le tranchant extérieur (21.a) se trouvent sur la même tête de coupe (22).

15. Procédé selon la revendication 11 ou 13, **caractérisé en ce que** toutes les têtes de coupe (22) des lames (20) de l'outil à tailler les engrenages (100) sont sur un cercle commun de l'outil à tailler les engrenages (100) qui est agencé de façon concentrique autour d'un centre de rotation (M) de l'outil à tailler les engrenages (100).

16. Procédé selon l'une des revendications 1 à 15, **caractérisé en ce que**, après l'usinage de tous les flancs de dents, on utilise un procédé de meulage pour usiner avec précision tous les flancs de dents.

17. Procédé selon l'une des revendications 1 à 7, **caractérisé en ce que** l'outil (100) est un outil de rectification (200) sous forme d'une meule-boisseau, une surface abrasive intérieure (221.i) servant de première surface abrasive et une surface abrasive extérieure (221.a) servant de deuxième surface abrasive.

18. Procédé selon l'une des revendications 1 à 7, **caractérisé en ce que** l'outil (100) est un outil de rectification (200) sous forme d'une meule-boisseau, une surface abrasive intérieure (221.i) servant de deuxième surface abrasive et une surface abrasive extérieure (221.a) servant de première surface abrasive.

19. Procédé selon l'une des revendications 1 à 16, **caractérisé en ce que** les dents (11) de la pièce d'usinage d'accouplement plan (10) obtiennent un bombement dans le cadre du fraisage de semi-finition, lequel bombement est influencé par l'inclinaison de l'outil (100, 200).

20. Procédé selon l'une des revendications 1 à 16, **caractérisé en ce que** les erreurs d'angle spiral de la pièce d'usinage d'accouplement plan (10) peuvent être compensées en modifiant le premier et/ou le deuxième réglage relatif.
